(19)

Europäisches Patentamt

European Patent Office

Office européen des brevets

(11) **EP 3 712 851 A1**

(12) **EUROPÄISCHE PATENTANMELDUNG**

(43) Veröffentlichungstag:
**23.09.2020 Patentblatt 2020/39**

(51) Int Cl.:
**G06T 7/254** *(2017.01)* **H04N 5/14** *(2006.01)*

(21) Anmeldenummer: **19163648.9**

(22) Anmeldetag: **19.03.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Bayer Animal Health GmbH**
**51373 Leverkusen (DE)**

(72) Erfinder: **Die Erfindernennung liegt noch nicht vor**

(74) Vertreter: **Maiwald Patent- und Rechtsanwaltsgesellschaft mbH**
**Grünstraße 25**
**40212 Düsseldorf (DE)**

(54) **REDUZIERUNG VON VIDEOMATERIAL AUF BEWEGUNGSABSCHNITTE**

(57) Die vorliegende Erfindung befasst sich mit der Bearbeitung von Videomaterial. Gegenstände der vorliegenden Erfindung sind ein Verfahren, eine Vorrichtung und ein Computerprogrammprodukt zur Reduzierung von Videomaterial auf zeitliche Abschnitte, in denen eine signifikante Bewegung eines Objekts aufgezeichnet ist. Ein weiterer Gegenstand der vorliegenden Erfindung ist die Verwendung der erfindungsgemäßen Vorrichtung bei der Beobachtung von Tieren.

**EP 3 712 851 A1**

**EP 3 712 851 A1**

**Beschreibung**

Die vorliegende Erfindung befasst sich mit der Bearbeitung von Videomaterial. Gegenstände der vorliegenden Erfindung sind ein Verfahren, eine Vorrichtung und ein Computerprogrammprodukt zur Reduzierung von Videomaterial auf zeitliche Abschnitte, in denen eine signifikante Bewegung eines Objekts aufgezeichnet ist. Ein weiterer Gegenstand der vorliegenden Erfindung ist die Verwendung der erfindungsgemäßen Vorrichtung bei der Beobachtung von Tieren.

Es gibt eine Vielzahl von Situationen, in denen Videomaterial automatisiert erzeugt und zu einem späteren Zeitpunkt analysiert wird. Ein Beispiel betrifft Tieraufnahmen in der Natur, bei denen eine Kamera aufgestellt wird, die automatisiert (ohne menschliches Zutun) Videoaufnahmen erzeugt, um Wildtiere nicht durch die Anwesenheit eines Menschen abzuschrecken. Zu einem späteren Zeitpunkt wird das Videomaterial von einem Menschen gesichtet und ausgewertet. Ein weiteres Beispiel betrifft die Überwachung eines Grundstücks oder einer technischen Anlage. Eine Kamera ist auf ein Grundstück oder eine technische Anlage oder dergleichen gerichtet und erzeugt kontinuierlich Videoaufnahmen. Falls sich eine unerlaubte Person auf dem Grundstück befindet oder ein Schaden an der technischen Anlage entsteht, kann das Videomaterial zu einem späteren Zeitpunkt gesichtet werden, um die unerlaubte Person identifizieren oder die Ursache für den Schaden bestimmen zu können.

In vielen Fällen umfasst das erzeugte Videomaterial Zeitabschnitte, die nicht von Interesse sind, zum Beispiel, weil in diesen Zeitabschnitten keine Veränderungen in dem von der entsprechenden Kamera beobachteten Bereich eingetreten sind.

Die technische Aufgabe, die durch die vorliegende Erfindung gelöst wird, besteht darin, Videoaufnahmen von einem Objekt auf diejenigen zeitlichen Abschnitte zu reduzieren, in denen eine signifikante Bewegung des Objekts aufgezeichnet ist.

Diese Aufgabe wird durch die Gegenstände der unabhängigen Patentansprüche gelöst. Bevorzugte Ausführungsformen finden sich in den abhängigen Patentansprüchen, in der vorliegenden Beschreibung und in den Zeichnungen.

Ein erster Gegenstand der vorliegenden Erfindung ist ein Verfahren zur Reduzierung von Videoaufnahmen auf zeitliche Abschnitte, in denen eine oder mehrere Bewegungen eines Objekts oberhalb einer Bewegungsschwelle aufgezeichnet sind, umfassend die folgenden Schritte:

a) Empfangen einer zeitlichen Abfolge von Bildern,

b) Erzeugen einer Abfolge von Differenzbildern aus der Abfolge von Bildern, dadurch, dass für jedes Paar benachbarter Bilder der zeitlichen Abfolge von Bildern jeweils ein Differenzbild erzeugt wird,

c) Erzeugen einer Abfolge von Mittelwertdifferenzbildern aus der Abfolge von Differenzbildern, dadurch, dass für alle Gruppen von aufeinander folgenden Differenzbildern mit einer definierten Anzahl von Differenzbildern, jeweils die einer Gruppe zugehörigen Differenzbilder gemittelt werden,

d) Erzeugen einer Abfolge von Binärbildern aus der Abfolge von Mittelwertdifferenzbildern,

e) Identifizieren von Gruppen zusammenhängender Bildpunkte in jedem Binärbild,

f) Ermitteln der Größe jeder Gruppe von zusammenhängenden Bildpunkten in jedem Binärbild und Vergleichen der jeweiligen Größe einer Gruppe mit einem Schwellenwert,

g) Identifizieren derjenigen Binärbilder, die mindestens eine Gruppe aufweisen, die so groß wie der Schwellenwert ist oder die größer als der Schwellenwert ist,

h) Löschen aller Bilder der zeitlichen Abfolge von Bildern, die nicht in die Erzeugung eines in Schritt g) identifizierten Binärbildes eingeflossen sind.

Ein weiterer Gegenstand der vorliegenden Erfindung ist eine Vorrichtung umfassend

-   eine Eingabeeinheit,

-   eine Steuereinheit,

-   eine Recheneinheit, und

- eine Ausgabeeinheit und/oder einen Datenspeicher,

wobei die Steuereinheit konfiguriert ist, die Eingabeeinheit zu veranlassen, eine Abfolge von Bildern zu empfangen, wobei die Steuereinheit konfiguriert ist, die Recheneinheit zu veranlassen, die folgenden Schritte durchzuführen:

a) Erzeugen einer Abfolge von Differenzbildern aus der Abfolge von Bildern, dadurch, dass für jedes Paar benachbarter Bilder der zeitlichen Abfolge von Bildern jeweils ein Differenzbild erzeugt wird,

b) Erzeugen einer Abfolge von Mittelwertdifferenzbildern aus der Abfolge von Differenzbildern, dadurch, dass für alle Gruppen von aufeinander folgenden Differenzbildern mit einer definierten Anzahl von Differenzbildern, jeweils die einer Gruppe zugehörigen Differenzbilder gemittelt werden,

c) Erzeugen einer Abfolge von Binärbildern aus der Abfolge von Mittelwertdifferenzbildern,

d) Identifizieren von Gruppen zusammenhängender Bildpunkte in jedem Binärbild,

e) Ermitteln der Größen der Gruppen und Vergleichen der jeweiligen Größe mit einem Schwellenwert,

f) Identifizieren derjenigen Binärbilder, die mindestens eine Gruppe aufweisen, die so groß wie der Schwellenwert ist oder die größer als der Schwellenwert ist,

g) Löschen aller Bilder der zeitlichen Abfolge von Bildern, die nicht in die Erzeugung eines in Schritt f) identifizierten Binärbildes eingeflossen sind, wobei eine reduzierte Abfolge von Bildern entsteht,

wobei die Steuereinheit konfiguriert ist, die reduzierte Abfolge von Bildern in dem Datenspeicher zu speichern und/oder die Ausgabeeinheit zu veranlassen, die reduzierte Abfolge von Bildern auszugeben.

Ein weiterer Gegenstand der vorliegenden Erfindung ist die Verwendung der erfindungsgemäßen Vorrichtung bei der Beobachtung von Tieren.

Ein weiterer Gegenstand der vorliegenden Erfindung ist ein Computerprogrammprodukt umfassend einen Datenträger, auf dem ein Computerprogramm gespeichert ist, das in den Arbeitsspeicher eines Computers geladen werden kann und dort den Computer dazu veranlasst, folgende Schritte ausführen:

a) Empfangen einer zeitlichen Abfolge von Bildern,

b) Erzeugen einer Abfolge von Differenzbildern aus der Abfolge von Bildern, dadurch, dass für jedes Paar benachbarter Bilder der zeitlichen Abfolge von Bildern jeweils ein Differenzbild erzeugt wird,

c) Erzeugen einer Abfolge von Mittelwertdifferenzbildern aus der Abfolge von Differenzbildern, dadurch, dass für alle Gruppen von aufeinander folgenden Differenzbildern mit einer definierten Anzahl von Differenzbildern, jeweils die einer Gruppe zugehörigen Differenzbilder gemittelt werden,

d) Erzeugen einer Abfolge von Binärbildern aus der Abfolge von Mittelwertdifferenzbildern,

e) Identifizieren von Gruppen zusammenhängender Bildpunkte in jedem Binärbild,

f) Ermitteln der Größen der Gruppen von zusammenhängenden Bildpunkten und Vergleichen der jeweiligen Größe einer Gruppe mit einem Schwellenwert,

g) Identifizieren derjenigen Binärbilder, die mindestens eine Gruppe aufweisen, die so groß wie der Schwellenwert ist oder die größer als der Schwellenwert ist,

h) Löschen aller Bilder der zeitlichen Abfolge von Bildern, die nicht in die Erzeugung eines in Schritt g) identifizierten Binärbildes eingeflossen sind, wobei eine reduzierten Abfolge von Bildern entsteht,

i) Speichern der reduzierten Abfolge von Bildern in einem Datenspeicher und/oder Ausgeben der reduzierten Abfolge von Bildern auf einem Monitor.

Die Erfindung wird nachstehend näher erläutert, ohne zwischen den Erfindungsgegenständen (Verfahren, Vorrichtung, Computerprogrammprodukt, Verwendung) zu unterscheiden. Die nachfolgenden Erläuterungen sollen vielmehr für alle Erfindungsgegenstände in analoger Weise gelten, unabhängig davon, in welchem Kontext sie erfolgen.

Mit der vorliegenden Erfindung können Videoaufnahmen automatisiert auf zeitliche Abschnitte reduziert werden, bei denen eine Bewegung eines Objekts oberhalb einer frei definierbaren Bewegungsschwelle aufgezeichnet sind.

Ein Objekt im Sinne der vorliegenden Erfindung ist jeder Gegenstand oder jedes Lebewesen, das sich (autonom) bewegen kann. Vorzugsweise handelt es sich bei dem Objekt um ein tierisches Lebewesen, bevorzugt um ein Versuchstier, am meisten bevorzugt um einen Hund.

Eine Bewegung ist jede zeitliche Änderung der Lage oder der Größe eines Objekts oder eines Teils des Objekts. Eine Bewegung kann eine Fortbewegung des Objekts von einem Ort zu einem anderen Ort sein. Eine Bewegung kann das Heben oder Senken oder Seitwärtsbewegen eines Teils eines Objekts sein, wie beispielsweise das Heben oder Senken oder Seitwärtsbewegen einer Gliedmaße eines Lebewesens. In einer bevorzugten Ausführungsform ist die Bewegung ein Schütteln des Körpers eines Lebewesens oder eines Teils des Körpers des Lebewesens, Aktivitäten eines Lebewesens die eigene Körperpflege betreffend und/oder ein Lecken, ein Kauen, ein Kratzen und/oder ein Reiben eines Lebewesens.

Der Ausgangspunkt für die Anwendung der vorliegenden Erfindung ist Videomaterial, das ein Objekt über eine definierte Zeitspanne zeigt. Denkbar ist auch, dass das Videomaterial mehrere Objekte zeigt. Denkbar ist ferner, dass das Videomaterial zumindest teilweise auch gar kein Objekt zeigen kann.

Videomaterial besteht üblicherweise aus einer Abfolge von Einzelbildern oder lässt sich in eine solche Abfolge von Einzelbildern umwandeln. In der vorliegenden Beschreibung wird das Videomaterial bzw. die Abfolge von Einzelbildern als (zeitliche) Abfolge von Bildern bezeichnet. Ein Bild ist eine Momentaufnahme eines Geschehens. Die Bilder der Abfolge von Bildern werden bei der Ausführung der vorliegenden Erfindung einer Reihe von Operationen unterzogen. Die Bilder der Abfolge von Bildern werden in dieser Beschreibung auch als ursprüngliche Bilder bezeichnet, da sie der Ausgangspunkt für die Ausführung der vorliegenden Erfindung sind.

Das mittels der vorliegenden Erfindung reduzierbare Videomaterial liegt üblicherweise in digitaler Form vor oder lässt sich in eine solche digitale Form bringen. Ein Einzelbild (Bild) ist demensprechend eine digitale Bildaufnahme eines Moments.

Digitales Videomaterial weist eine definierte Bildwechselfrequenz (auch als Bildfrequenz oder Bildrate bezeichnet) auf. Die Bildwechselfrequenz bezeichnet die Anzahl der Einzelbilder, die pro Zeitspanne aufgenommen oder wiedergegeben werden und wird meist in der Einheit fps (engl.: *frames per second*, Bilder pro Sekunde) oder Hz angegeben. Üblich sind 10 Hz bis 240 Hz. Vorzugsweise beträgt die Bildwechselfrequenz 20 bis 40 Hz.

Jedem Bild ist ein Zeitpunkt zugeordnet oder jedem Bild lässt sich ein Zeitpunkt zuordnen. Üblicherweise handelt es sich bei diesem Zeitpunkt um den Zeitpunkt, an dem das Bild erzeugt worden ist (absolute Zeit). Dem Fachmann ist bewusst, dass die Erzeugung einer Bildaufnahme eine gewisse Zeitspanne in Anspruch nimmt. Einem Bild kann z.B. der Zeitpunkt des Beginns der Aufnahme des Bildes oder der Zeitpunkt der Fertigstellung der Bildaufnahme zugeordnet werden. Es ist aber auch denkbar, dass den Bildern der zeitlichen Abfolge willkürliche Zeitpunkte zugeordnet werden (z.B. relative Zeitpunkte).

Anhand eines Zeitpunktes lässt sich ein Bild zeitlich in Bezug auf ein anderes Bild einordnen; anhand des Zeitpunkts eines Bilds lässt sich feststellen, ob der in dem Bild gezeigte Moment zeitlich vor oder zeitlich nach einem, in einem anderen Bild gezeigten Moment stattgefunden hat. Der einem Bild zugeordnete Zeitpunkt wird in dieser Beschreibung auch als Zeitstempel bezeichnet. Der Zeitstempel kann Informationen über das Jahr, den Monat, den Tag, die Stunde, die Minute, die Sekunde, die Zehntelsekunde und/oder die Hundertstelsekunde, an dem der gezeigte Moment stattgefunden hat, enthalten.

Denkbar ist aber auch, dass einem ersten Bild der zeitlichen Abfolge von Bildern willkürlich ein Zeitpunkt 0 zugeordnet wird und den zeitlich nachfolgenden Bildern diejenige Zeitspanne zugeordnet ist, die seit dem Zeitpunkt 0 vergangen ist. Ist einem ersten Bild ein erster Zeitpunkt zugeordnet und einem zweiten Bild, das zeitlich unmittelbar auf das erste Bild folgt, ein zweiter Zeitpunkt zugeordnet, so entspricht der Kehrwert der Zeitspanne zwischen dem ersten Zeitpunkt und dem zweiten Zeitpunkt üblicherweise der Bildwechselfrequenz des vorliegenden Videomaterials.

Zusätzlich oder anstelle eines Zeitpunktes kann jedes Bild mit einer eindeutigen Kennung versehen werden, anhand der das Bild identifiziert und von anderen Bildern unterschieden werden kann. Es ist zum Beispiel denkbar, dass die Bilder der Abfolge von Bildern (zusätzlich) durchnummeriert werden. Das erste Bild der Abfolge von Bildern erhält z.B. die Ziffer 1, das unmittelbar zeitlich auf das erste Bild folgende Bild die Ziffer 2 und so weiter.

Digitale Bilder können in verschiedenen Formaten vorliegen. Digitale Bilder können beispielsweise als Rastergrafiken kodiert werden. Rastergrafiken bestehen aus einer rasterförmigen Anordnung von so genannten Bildpunkten (Pixeln), denen jeweils eine Farbe zugeordnet ist. Die Hauptmerkmale einer Rastergrafik sind daher die Bildgröße (Breite und Höhe gemessen in Pixeln, umgangssprachlich auch Bildauflösung genannt) sowie die Farbtiefe.

Einem Bildpunkt eines digitalen Bildes ist üblicherweise eine Farbe zugeordnet. Die für einen Bildpunkt verwendete Kodierung der Farbe definiert sich unter anderem über den Farbraum und die Farbtiefe. Der einfachste Fall ist ein Binärbild, bei dem ein Bildpunkt einen Schwarzweiß-Wert speichert. Bei einem Bild, dessen Farbe über den so genannten RGB-Farbraum definiert ist (RGB steht für die Grundfarben Rot, Grün und Blau), besteht jeder Bildpunkt aus drei Subpixeln, einem Subpixel für die Farbe Rot, einem Subpixel für die Farbe Grün und einem Subpixel für die Farbe Blau. Die Farbe eines Bildpunktes ergibt durch die Überlagerung (additives Mischen) der Farbwerte der Subpixel. Der Farbwert eines Subpixels ist in 256 Farbnuancen unterteilt, die Tonwerte genannt werden und von 0 bis 255 reichen. Die Farbnuance "0" eines jeden Farbkanals ist die dunkelste. Haben alle drei Kanäle den Tonwert 0, erscheint der entsprechende Bildpunkt schwarz; haben alle drei Kanäle den Tonwert 255, erscheint der entsprechende Bildpunkt weiß.

Bei der Ausführung der vorliegenden Erfindung werden digitale Bildaufnahmen bestimmten Operationen unterworfen. Die Operationen betreffen dabei überwiegend die Bildpunkte, bzw. die Tonwerte der einzelnen Bildpunkte. Es gibt eine Vielzahl an möglichen digitalen Bildformaten und Farbkodierungen. Vereinfachend wird in dieser Beschreibung davon ausgegangen, dass die vorliegenden Bilder Graustufen-Rastergrafiken mit einer spezifischen Zahl an Bildpunkten sind, wobei jedem Bildpunkt ein Tonwert zugeordnet ist, der den Grauwert des Bildes angibt. Diese Annahme soll jedoch in keiner Weise limitierend verstanden werden. Dem Fachmann der Bildverarbeitung ist klar, wie er die Lehre dieser Beschreibung auf Bilder, die in anderen Bildformaten vorliegen und/oder bei denen die Farbwerte anders kodiert sind, übertragen kann.

In einem ersten Schritt wird aus der vorliegenden Abfolge von Bildern eine Abfolge von Differenzbildern erzeugt. Für jedes Paar benachbarter Bilder wird jeweils ein Differenzbild erzeugt. Zwei Bilder sind dann benachbart, wenn sie in der vorliegenden Abfolge zeitlich unmittelbar aufeinander folgen, ohne dass es ein Bild gibt, das zeitlich zwischen den zwei Bildern liegt. Liegt beispielsweise eine Abfolge von 5 Bilder vor, werden

- ein erstes Differenzbild aus dem ersten und dem zweiten Bild erzeugt,

- ein zweites Differenzbild aus dem zweiten und dem dritten Bild erzeugt,

- ein drittes Differenzbild aus dem dritten und dem vierten Bild erzeugt, und

- ein viertes Differenzbild aus dem vierten und dem fünften Bild erzeugt.

Ein Differenzbild hat üblicherweise genauso viele Bildpunkte wie jedes der Bilder, aus denen es erzeugt worden ist.

Ein Differenzbild wird erzeugt, indem für jeden Bildpunkt eines Bildes der Tonwert des Bildpunktes von dem Tonwert des entsprechenden Bildpunktes des benachbarten Bildes abgezogen wird und von dem Ergebnis der Subtraktion der Absolutwert erzeugt wird, um negative Tonwerte zu vermeiden.

Zwei Bildpunkte entsprechen einander, wenn sie dieselben Koordinaten (in der Darstellung als Rastergrafik) aufweisen.

Das Ergebnis ist eine Abfolge von Differenzbildern, wobei jedes Differenzbild eine Anzahl von Bildpunkten umfasst, wobei jedem Bildpunkt ein Tonwert zugeordnet ist. Treten von einem Bild zu einem benachbarten Bild keine Änderungen auf, so entsprechen die Tonwerte der Bildpunkte des einen Bildes den Tonwerten der Bildpunkte des benachbarten Bildes. Bei der Subtraktion ergibt sich (wenn kein Rauschen vorhanden ist) für jeden Bildpunkt des Differenzbildes der Tonwert 0 (Null). In einer Graustufendarstellung ist das Differenzbild schwarz. Ein schwarzes Differenzbild zeigt an, dass es von einem Bild zum benachbarten Bild keine Änderung in der aufgezeichneten Szene gegeben hat.

Treten hingegen Änderungen von einem Bild zu einem benachbarten Bild in der aufgezeichneten Szene auf, so machen sich diese Änderungen in Bildpunkten mit Tonwerten bemerkbar, die von Null verschieden sind.

Vorzugsweise werden die Differenzbilder mit einer Kennung versehen, die einen Rückschluss auf die Bilder erlaubt, die in die Erzeugung eines Differenzbilds eingeflossen sind. Sind die Bilder beispielsweise durchnummeriert und tragen die Zahlen 1, 2, 3 usw. kann das Differenzbild eine Kennung tragen, die die Ziffern der zugehörigen Bilder beinhaltet. Zum Beispiel kann ein Differenzbild, das aus dem Bild mit der Ziffer 1 und dem Bild mit der Ziffer 2 generiert worden ist, eine Kennung 1-2 enthalten.

Denkbar ist auch, dass einem Differenzbild, das aus der Subtraktion eines ersten Bildes von einem zweiten Bild entstanden ist, der dem ersten Bild zugeordnete Zeitpunkt zugeordnet wird und/oder der dem zweiten Bild zugeordnete Zeitpunkt zugeordnet wird und/oder ein Zeitpunkt zugeordnet wird, der zeitlich zwischen dem Zeitpunkt, der dem ersten Bild zugeordnet ist und dem Zeitpunkt, der dem zweiten Bild zugeordnet ist, liegt. Die den Differenzbildern zugeordneten Zeitpunkte sind vorzugsweise so definiert, dass der Kehrwert der Zeitspanne zwischen den Zeitpunkten zweier unmittelbar aufeinander folgenden Differenzbildern der Bildwechselfrequenz des vorliegenden Videomaterials entspricht.

In einem nächsten Schritt wird aus der Abfolge von Differenzbildern eine Abfolge von Mittelwertdifferenzbildern erzeugt. In die Erzeugung eines jeden Mittelwertdifferenzbildes fließt eine definierte Zahl an Differenzbilder ein, die hier als $N$ bezeichnet wird. $N$ ist eine natürliche ganze Zahl, die größer als 1 ist. Jedes Mittelwertdifferenzbild wird aus der Zahl $N$ an zeitlich unmittelbar aufeinander folgenden Differenzbildern erzeugt. Dazu wird zunächst ein Zeitfenster definiert. Das Zeitfenster ist ein virtuelles Zeitfenster. Es definiert eine Zeitspanne definierter Länge. Die Länge der Zeitspanne beträgt das $N$-fache der Zeitspanne zwischen zwei unmittelbar aufeinander folgenden Differenzbildern. Dementsprechend kann das Zeitfenster genau $N$ Differenzbilder aufnehmen. Zur Mittelwertbildung wird das Zeitfenster bildweise entlang der Abfolge von Differenzbildern verschoben, und es wird an jeder Position des Zeitfensters ein Mittelwertbild von den, in dem Zeitfenster enthaltenen Differenzbildern erzeugt. Zu Beginn der Mittelwertbildung wird das Zeitfenster an den Anfang der Abfolge der Differenzbilder positioniert. Es enthält an dieser Position die ersten $N$ Differenzbilder (1 bis $N$). Aus diesen ersten $N$ Differenzbildern wird ein Mittelwertbild erzeugt. Anschließend wird das Zeitfenster ein Differenzbild weiter verschoben. Es enthält nun die Differenzbilder 2 bis ($N$+1). Es wird ein Mittelwertbild von den Differenzbildern 2 bis ($N$+1) erzeugt. Dann wird das Zeitfenster wiederum um ein Differenzbild weiter geschoben. Es enthält nun die Differenzbilder 3 bis ($N$+2). Es wird ein Mittelwertbild von den Differenzbildern 3 bis ($N$+2) erzeugt. Abschließend wird das Zeitfenster wiederum um ein Differenzbild weiter geschoben und so fort.

Ein Mittelwertbild hat üblicherweise genauso viele Bildpunkte wie jedes der Differenzbilder, aus denen es erzeugt worden ist.

Bei der Erzeugung jedes Mittelwertbildes werden die Mittelwerte der Tonwerte korrespondierender Bildpunkte der Differenzbilder gebildet und als Tonwerte der Bildpunkte des Mittelwertbildes gesetzt. Bei den Mittelwerten kann es sich um arithmetische oder geometrische oder quadratische oder andere Mittelwerte handeln. Vorzugsweise werden die arithmetischen Mittelwerte gebildet. Das Ergebnis ist eine Abfolge von Mittelwertbildern mit einer Anzahl an Bildpunkten, wobei jedem Bildpunkt ein Tonwert zugeordnet ist, wobei der Tonwert ein Mittelwert der Tonwerte von N Differenzbildern ist. Da die Mittelwertbilder aus Differenzbildern erzeugt werden, werden sie in dieser Beschreibung auch als Mittelwertdifferenzbilder bezeichnet.

Die Zahl N der Differenzbilder, über die gemittelt wird, und aus denen jeweils ein Mittelwertdifferenzbild erzeugt wird, kann zum Beispiel im Bereich von 2 bis 10.000 oder im Bereich von 5 bis 1.000 oder im Bereich von 10 bis 100 oder dergleichen liegen. Die Zahl kann vom Objekt, von der Bildrate, von der Auflösung, von der Szene und/oder dergleichen abhängen. Es lässt sich empirisch ermitteln, welche Zahl für eine bestimmte Anwendung optimale Ergebnisse liefert, indem verschiedene Zahlen ausprobiert und die Ergebnisse vergleichen werden. Ein gutes Ergebnis reduziert das vorhandene Videomaterial auf die zeitlichen Abschnitte, in denen die jeweils interessierenden Bewegungen festgehalten sind, während die herausgeschnittenen Abschnitte keine interessierenden Bewegungen enthalten. Bei einem schlechten Ergebnis werden Abschnitte herausgeschnitten, die von Interesse sind und/oder das reduzierte Videomaterial umfasst Abschnitte, die nicht von Interesse sind.

Jedem Mittelwertdifferenzbild wird vorzugsweise ein Zeitpunkt zugeordnet. Dabei kann es sich z.B. um den Zeitpunkt handeln, der demjenigen Differenzbild zugeordnet ist, das den Anfang des jeweiligen Zeitfensters bildet (das erste Differenzbild in der Reihe der $N$ Differenzbilder eines Zeitfensters, über die gemittelt wird). Es kann sich auch um den Zeitpunkt handeln, der demjenigen Differenzbild zugeordnet ist, das das Ende eines jeweiligen Zeitfensters bildet (das letzte Differenzbild in der Reihe der $N$ Differenzbilder eines Zeitfensters, über die gemittelt wird). Es kann sich auch um einen mittleren (z.B. arithmetisch gemittelten) Zeitpunkt handeln.

Vorzugsweise wird jedes Mittelwertdifferenzbild mit einer Kennung versehen, die einen Rückschluss auf die Differenzbilder und/oder die Bilder erlaubt, die in die Bildung des Mittelwertdifferenzbildes eingeflossen sind. Sind die Bilder beispielsweise durchnummeriert und tragen die Zahlen 1, 2, 3, 4 usw. und sind die Differenzbilder mit einer entsprechenden Kennung wie zum Beispiel 1-2, 2-3, 3-4 usw. versehen und ist ein Mittelwertdifferenzbild aus den Differenzbildern 1-2, 2-3 und 3-4 erzeugt worden, kann das Mittelwertdifferenzbild die Kennung 1-2-3-4 tragen.

In einer bevorzugten Ausführungsform wird in einem nächsten Schritt zur Unterdrückung von Rauschen in den Mittelwertdifferenzbildern der Kontrast der Mittelwertdifferenzbilder reduziert. Die Kontrastreduzierung erfolgt vorzugsweise durch Weichzeichnen (engl.: *blur*), z.B. durch Anwenden eines Gaußschen Weichzeichners (engl. *Gaussian blur*).

Ein Gaußscher Weichzeichner nutzt einen Gauß-Filter um Bildinhalte zu glätten. Der Filter führt zu einer Verminderung des Bildrauschens und lässt kleinere Strukturen verschwinden um gröbere Bereiche zu erhalten. Ein Gaußscher Weichzeichner wirkt auf jeden Bildpunkt eines Mittelwertdifferenzbildes und setzt seinen Tonwert auf einen gewichteten Mittelwert der Tonwerte aller Bildpunkt, die in einem definierten Radius zum betrachteten Bildpunkt liegen. Die Gewichtung erfolgt auf Basis der Gaußschen Normalverteilung. Gaußsche Weichzeichner sind dem Fachmann der digitalen Bildverarbeitung bekannt (sie z.B. William K. Pratt: Introduction to Digital Image Processing, CRC Press, 2013, ISBN: 978-1-4822-1670-7) und sie sind in vielen Bildverarbeitungssoftwareprogrammen implementiert. Parameter, die bei der Anwendung eines Gaußschen Weichzeichners vorgegeben werden müssen, sind die Standardabweichung der Gauß-Funktion (Sigma) und die Größe des Radius bzw. die Größe der Matrix an Bildpunkten, die bei der gewichteten Mittelung berücksichtigt werden sollen (Kernel). Adäquate Parameterwerte lassen sich empirisch ermitteln. Beispiele für Parameterwerte sind Sigma = 0,5 oder Sigma = 1 und Kernel=3x3 oder Kernel=5x5.

Das Ergebnis der Kontrastreduzierung ist eine Abfolge kontrastreduzierter Mittelwertdifferenzbilder.

Jedem kontrastreduzierten Mittelwertdifferenzbild wird vorzugsweise der Zeitpunkt des entsprechenden Mittelwertdifferenzbildes, aus dem es erzeugt worden ist, zugeordnet.

Weisen die Mittelwertdifferenzbilder eine eindeutige Kennung auf, so weisen die kontrastreduzierten Mittelwertdifferenzbilder vorzugsweise ebenfalls eine eindeutige Kennung auf. Die eindeutigen Kennungen der kontrastreduzierten Mittelwertdifferenzbilder können beispielsweise die eindeutigen Kennungen der entsprechenden Mittelwertdifferenzbilder, aus denen die erzeugt worden sind, umfassen.

Ein kontrastreduziertes Mittelwertdifferenzbild hat üblicherweise genauso viele Bildpunkte wie das Mittelwertdifferenzbild, aus dem es erzeugt worden ist.

In einem weiteren Schritt werden die Mittelwertdifferenzbilder bzw. die kontrastreduzierten Mittelwertdifferenzbilder binarisiert. Das bedeutet, dass jedem Bildpunkt eines Mittelwertbildes einer von zwei Tonwerten - ein erster Tonwert oder ein zweiter Tonwert - zugeordnet wird. Der erste Tonwert kann zum Beispiel den Wert 0 (schwarz) haben und der zweite Tonwert kann zum Beispiel den Wert 255 (weiß) haben. Die Zuordnung erfolgt auf Basis des bestehenden Tonwerts eines Bildpunktes und auf Basis eines Tonwertschwellenwertes. Ist der Tonwert eines Bildpunktes kleiner als der Tonwertschwellenwert, so wird der Tonwert des Bildpunktes auf den ersten Tonwert gesetzt; ist der Tonwert des Bildpunktes größer als der Tonwertschwellenwert oder entspricht der Tonwert des Bildpunktes dem Tonwertschwellenwert, so wird der Tonwert des Bildpunktes auf den zweiten Tonwert gesetzt.

Ein adäquater Tonwertschwellenwert lässt sich empirisch ermitteln. Beispiele für Tonwertschwellenwerte (bei einer Tonwertspanne von 0 bis 255) sind 10 oder 20 oder 30 oder 50.

Das Ergebnis der Binarisierung ist eine Abfolge von binarisierten Mittelwertdifferenzbildern, die in dieser Beschreibung auch als Binärbilder bezeichnet werden.

Jedem Binärbild ist vorzugsweise ein Zeitpunkt zugordnet. Der Zeitpunkt eines Binärbildes entspricht vorzugsweise dem Zeitpunkt, der demjenigen (kontrastreduzierten) Mittelwertdifferenzbild zugeordnet ist, aus dem das Binärbild erzeugt worden ist.

Weisen die Mittelwertdifferenzbilder eine eindeutige Kennung auf, so weisen die Binärbilder vorzugsweise ebenfalls eine eindeutige Kennung auf. Die eindeutigen Kennungen der Binärbilder können beispielsweise die eindeutigen Kennungen der entsprechenden (kontrastreduzierten) Mittelwertdifferenzbilder umfassen.

Ein Binärbild hat üblicherweise genauso viele Bildpunkte wie das (kontrastreduzierte) Mittelwertdifferenzbild, aus dem es erzeugt worden ist.

In einer bevorzugten Ausführungsform werden in einem weiteren Schritt diejenigen Bildpunkte der Binärbilder, die den zweiten Tonwert aufweisen, einfach oder mehrfach auf die Form eines definierten strukturierenden Elementes ausgedehnt (dilatiert).

In einer bevorzugten Ausführungsform ist das strukturierende Element eine ($n$ x $m$) - Matrix von Bildpunkten mit dem zweiten Tonwert. Das bedeutet, dass ein Bildpunkt mit einem zweiten Tonwert auf eine ($n$ x $m$) - Matrix von Bildpunkten mit einem zweiten Tonwert ausgedehnt wird.

In einer besonders bevorzugten Ausführungsform handelt es sich um eine (3 x 3)-Matrix. Besonders bevorzugt wird ein solcher Dilatationsoperator zweifach hintereinander angewendet.

Das Ergebnis einer solchen einfachen oder mehrfachen Dilatation ist eine Abfolge dilatierter Binärbilder.

Jedem dilatierten Binärbild ist vorzugsweise ein Zeitpunkt zugordnet. Der Zeitpunkt eines dilatierten Binärbildes entspricht vorzugsweise dem Zeitpunkt, der demjenigen Binärbild zugeordnet ist, aus dem das dilatierte Binärbild erzeugt worden ist.

Weisen die Binärbilder eine eindeutige Kennung auf, so weisen die dilatierten Binärbilder vorzugsweise ebenfalls eine eindeutige Kennung auf. Die eindeutigen Kennungen der dilatierten Binärbilder können beispielsweise die eindeutigen Kennungen der entsprechenden Binärbilder umfassen.

Ein dilatiertes Binärbild hat üblicherweise genauso viele Bildpunkte wie das Binärbild, aus dem es erzeugt worden ist.

In einem nächsten Schritt werden in jedem (dilatierten) Binärbild der Abfolge von Binärbildern Gruppen von zusammenhängenden Bildpunkten identifiziert, die den zweiten Tonwert aufweisen, und es werden die jeweiligen Größen dieser Gruppen bestimmt.

In einer Rastergrafik verfügen die Bildpunkte in den vier Ecken der Rastergrafik über jeweils drei unmittelbar benachbarte Bildpunkte, die Bildpunkte an den Kanten der Rastergrafik jeweils über fünf unmittelbar benachbarte Bildpunkte und die übrigen Bildpunkte der Rastergrafik über jeweils acht unmittelbar benachbarte Bildpunkte. Zusammenhängende Bildpunkte mit dem zweiten Tonwert sind all diejenigen Bildpunkte, dessen Tonwert dem zweiten Tonwert entspricht und die mindestens einen unmittelbar benachbarten Bildpunkt aufweisen, dessen Tonwert ebenfalls dem zweiten Tonwert entspricht.

Die Größe einer Gruppe kann über die Anzahl der Bildpunkte mit einem zweiten Tonwert, die zu der Gruppe gehören, bestimmt und angegeben werden.

Denkbar ist auch, dass die Größe einer Gruppe über die Fläche bestimmt und angegeben wird, die diese Gruppe einnimmt.

In einer bevorzugten Ausführungsform wird die Größe einer Gruppe über die Zahl der Bildpunkte in einem Rahmen bestimmt, der Gruppen zusammenhängender Bildpunkte mit einem zweiten Tonwert umrahmt.

In dieser bevorzugten Ausführungsform werden Gruppen von zusammenhängenden Bildpunkten, die den zweiten Tonwert aufweisen, mit einem Rahmen umrahmt, wobei der Rahmen so gewählt wird, dass er alle folgenden Kriterien erfüllt:

- der Rahmen ist rechteckig,
- seine Kanten verlaufen parallel zu den Kanten des Binärbildes,
- alle Bildpunkte, die den zweiten Tonwert aufweisen und die zu einer Gruppe zusammenhängender Bildpunkte gehören, liegen innerhalb des Rahmens,
- der Rahmen umfasst so wenige Bildpunkte wie möglich, die nicht zu der Gruppe zusammenhängender Bildpunkte mit dem zweiten Tonwert gehören.

Die Größen der Gruppen zusammenhängender Bildpunkte, die den zweiten Tonwert aufweisen, werden in jeweils mit einem Gruppenschwellenwert verglichen. Weisen Binärbilder ausschließlich Bildpunkte mit einem ersten Tonwert auf, sind keine entsprechenden Gruppen vorhanden. Beinhaltet ein Binärbild wenigstens eine Gruppe, die genau so groß wie der Gruppenschwellenwert ist oder die größer als der Gruppenschwellenwert ist, dann zeigt das entsprechende Binärbild eine Bewegung oberhalb einer Bewegungsschwelle an. Beinhaltet ein Binärbild nur eine oder mehrere Gruppen, die kleiner als der Gruppenschwellenwert ist/sind, dann zeigt das entsprechende Binärbild keine Bewegung oberhalb einer Bewegungsschwelle an. Binärbilder, die keine Bewegung oberhalb einer Bewegungsschwelle anzeigen, sind für eine weitere Auswertung nicht interessant.

Es gilt demnach, diejenigen (dilatierten) Binärbilder zu identifizieren, die mindestens eine Gruppe aufweisen, die so groß wie der Gruppenschwellenwert ist oder die größer als der Schwellenwert ist, und diejenigen Bilder der zeitlichen Abfolge von Bildern, die nicht in die Erzeugung eines solchen identifizierten (dilatierten) Binärbildes eingeflossen sind, zu löschen.

Die Identifizierung von Bildern der Abfolge von Bildern, die in die Erzeugung von (dilatierten) Binärbildern eingeflossen sind, kann zum Beispiel anhand der eindeutigen Kennung der (dilatierten) Binärbilder erfolgen, wenn die eindeutige Kennung Rückschlüsse auf die ursprünglichen Bilder zulässt (z.B., weil die eindeutige Kennung der Binärbilder die eindeutige Kennung der ursprünglichen Bilder umfasst).

Die Identifizierung derjenigen Bilder der Abfolge von Bildern, die in die Erzeugung von (dilatierten) Binärbildern eingeflossen sind, kann zum Beispiel auch anhand der Zeitpunkte, die den (dilatierten) Binärbildern zugeordnet sind, erfolgen.

Die Erfindung kann mit Hilfe eine Vorrichtung ausgeführt werden. Diese erfindungsgemäße Vorrichtung umfasst eine Eingabeeinheit, eine Steuereinheit, eine Recheneinheit, eine Ausgabeeinheit und/oder einen Datenspeicher.

Vorzugsweise ist die erfindungsgemäße Vorrichtung ein Computer; es ist auch denkbar, dass die erfindungsgemäße Vorrichtung mehrere Computer umfasst.

Ein "Computer" ist ein Gerät zur elektronischen Datenverarbeitung, das mittels programmierbarer Rechenvorschriften Daten verarbeitet. Ein solches Gerät umfasst üblicherweise eine Hauptplatine (engl.: motherboard), diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabeeinheiten dienen. Beispiele sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Computer von heute werden häufig in Desktop-PCs, Portable PCs, Laptops, Notebooks, Netbooks und Tablet-PCs und so genannte Handhelds (z.B. Smartphone) unterteilt. Die Erfindung kann mit allen diesen Computern ausgeführt werden.

Bei der Steuereinheit und der Recheneinheit der erfindungsgemäßen Vorrichtung kann es sich beispielsweise um einen oder mehrere Prozessoren in Verbindung mit einem oder mehreren Arbeitsspeichern handeln. Die Eingabeeinheit kann eine (kabellose und/oder kabelgebundene) Verbindung zu einem Netzwerk oder ein serieller Anschluss (z.B. USB) oder dergleichen sein, über die/den Videomaterial von einer Kamera auf die Vorrichtung übertragen werden kann. Das Videomaterial wird üblicherweise auf einem Datenspeicher (z.B. einer Festplatte) gespeichert. Die Eingabeeinheit kann auch durch einen Nutzer der erfindungsgemäßen Vorrichtung verwendet werden, um Eingaben über eine Tastatur, eine Maus, ein Mikrofon, ein Touchscreen oder dergleichen vorzunehmen (z.B. die Eingabe eines oder mehrerer Schwellenwerte, der Zahl N oder dergleichen).

Das Ergebnis der erfindungsgemäßen Bearbeitung des Videomaterials (die reduzierte Abfolge von Bildern) kann auf dem Datenspeicher (z.B. der Festplatte) gespeichert oder auf einem Monitor ausgegeben werden.

Die Erfindung wird nachstehend durch Figuren näher erläutert, ohne die Erfindung auf die in den Figuren gezeigten Merkmale und Merkmalskombinationen beschränken zu wollen.

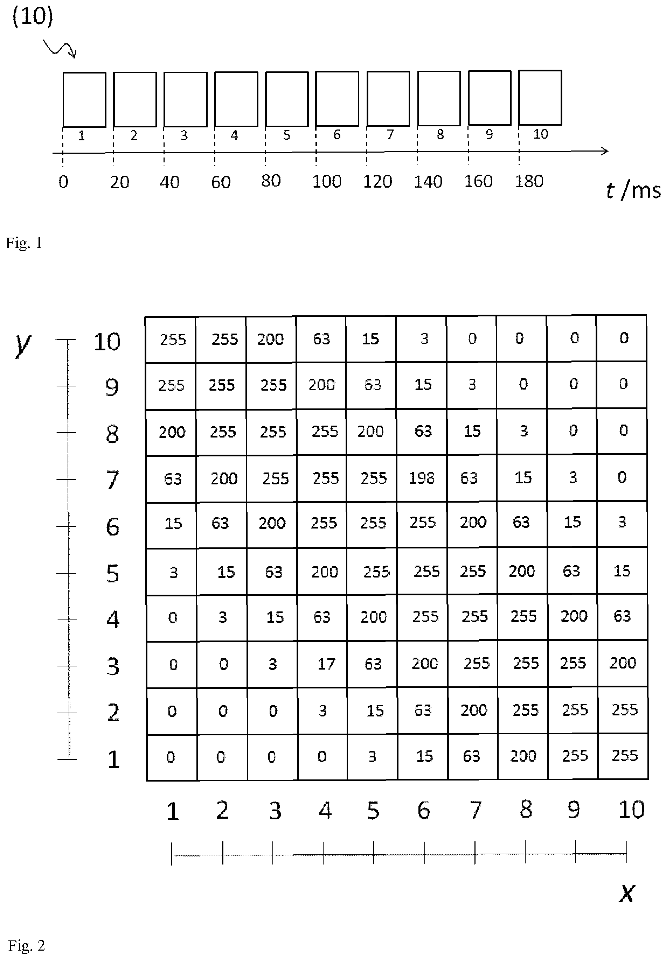

Fig. 1 zeigt schematisch und beispielhaft eine Abfolge von Bildern. Die Abfolge (10) umfasst 10 Bilder. Die Bilder weisen eine eindeutige Kennung auf: sie sind von 1 bis 10 durchnummeriert. Jedem Bild der Abfolge (10) der Bilder ist ein Zeitpunkt zugordnet. Dem Bild mit der eindeutigen Kennung 1 ist der Zeitpunkt 0 zugeordnet. Dem Bild mit der eindeutigen Kennung 2 ist der Zeitpunkt 20 ms (Millisekunden) zugeordnet. Dem Bild mit der eindeutigen Kennung 3 ist der Zeitpunkt 40 ms zugeordnet. Dem Bild mit der eindeutigen Kennung 4 ist der Zeitpunkt 60 ms zugeordnet, und so fort. Der zeitliche Abstand zwischen zwei Bildern beträgt damit 20 ms. Die Bildwechselfrequenz beträgt im vorliegenden Beispiel demnach 50 Bilder pro Sekunde.

Fig. 2 zeigt schematisch und beispielhaft ein Bild in Form einer Graustufen-Rastergrafik. Die Rastergrafik besteht aus 10 x 10 = 100 Bildpunkten. Jeder Bildpunkt lässt sich anhand einer x-Koordinate und einer y-Koordinate eindeutig adressieren. Jedem Bildpunkt ist ein Tonwert zugeordnet. Der Tonwert kann beispielsweise eine Graustufe angeben. So ist es denkbar, dass jedem Bildpunkt in Fig. 2 eine von 256 Graustufen zugeordnet ist, wobei der Tonwert 0 für den Farbton (die Graustufe) "Schwarz" und der Tonwert 255 für den Farbton (die Graustufe) "Weiß" steht, und die übrigen Tonwerte Graustufen zwischen "Schwarz" und "Weiß" angeben. So hat im vorliegenden Beispiel der Bildpunkt mit den x,y-Koordinaten 4,3 beispielsweise einen Tonwert von 17 und der Bildpunkt mit den x,y-Koordinaten 6,7 beispielsweise einen Tonwert von 198.

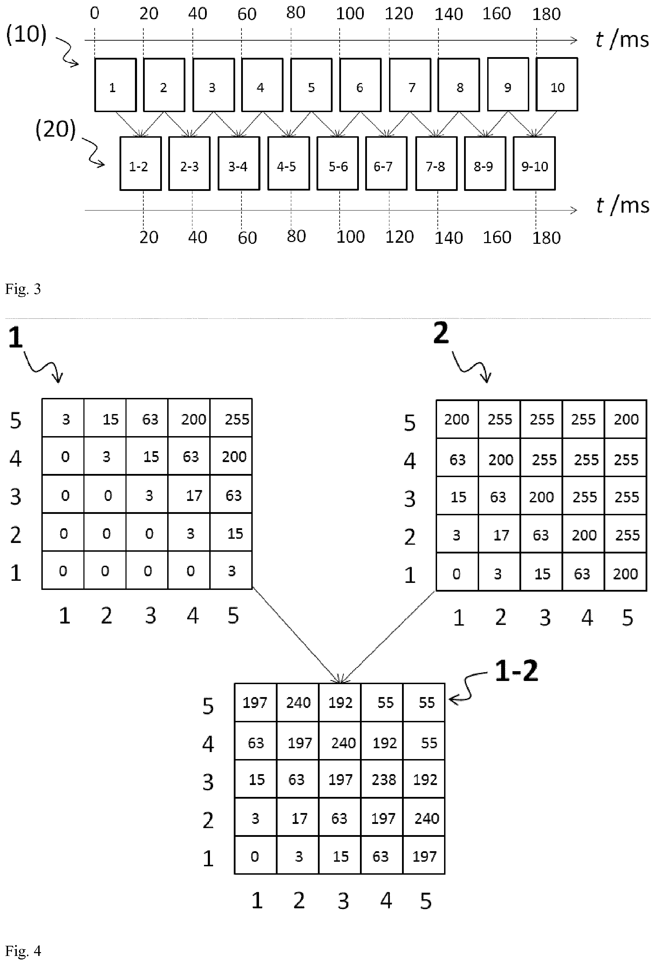

Fig. 3 zeigt beispielhaft und schematisch, wie aus einer Abfolge (10) von 10 Bildern mit den eindeutigen Kennungen 1, 2, 3, 4, 5, 6, 7, 8, 9 und 10 eine Abfolge (20) von 9 Differenzbildern mit den eindeutigen Kennungen 1-2, 2-3, 3-4, 4-5, 5-6, 6-7, 7-8-, 8-9 und 9-10 erzeugt wird.

Die Differenzbilder werden aus paarweise zeitlich unmittelbar aufeinander folgenden Bildern erzeugt: ein erstes Differenzbild 1-2 wird aus den Bildern mit den Kennungen 1 und 2 erzeugt, ein zweites Differenzbild 2-3 wird aus den Bildern mit den Kennungen 2 und 3 erzeugt und so fort. Die eindeutige Kennung eines Differenzbildes ergibt somit Rückschlüsse aus den Bildern, aus denen es erzeugt worden ist.

Jedem Differenzbild ist ein Zeitpunkt zugeordnet. Dem Differenzbild mit der Kennung 1-2 ist der Zeitpunkt 20 ms zugeordnet, dem Differenzbild mit der Kennung 2-3 ist der Zeitpunkt 40 ms zugeordnet und so fort. Die Bildwechselfrequenz der Abfolge (20) von Differenzbildern entspricht der Bildwechselfrequenz der Abfolge (10) von Bildern; sie beträgt 50 Bilder pro Sekunde.

Fig. 4 zeigt beispielhaft und schematisch, wie aus einem Bild mit der Kennung 1 und einem zeitlich unmittelbar auf das Bild mit der Kennung 1 folgenden Bild mit der Kennung 2 ein Differenzbild mit der Kennung 1-2 erzeugt wird.

Das Bild mit der Kennung 1, das Bild mit der Kennung 2 und das Differenzbild mit der Kennung 1-2 bestehen jeweils aus 5 x 5 = 25 Bildpunkten. Jeder Bildpunkt ist durch Koordinaten eindeutig adressierbar. Jedem Bildpunkt ist ein Tonwert zugeordnet. Bei der Erzeugung des Differenzbildes wird der Absolutwert der Differenz des Tonwertes eines Bildpunktes und des entsprechenden Bildpunktes des unmittelbar folgenden Bildes errechnet und als Tonwert des entsprechenden Bildpunktes des Differenzbildes gesetzt. Bildpunkte entsprechen dann einander, wenn sie die gleichen Koordinaten haben. Der Tonwert $T^{1-2}(4,3)$ des Bildpunktes mit den Koordinaten 4,3 des Differenzbildes 1-2 ergibt sich beispielsweise aus dem Tonwert $T^1(4,3)$ des Bildpunktes mit den Koordinaten 4,3 des Bildes mit der Kennung 1 und dem Tonwert $T^2(4,3)$ des Bildpunktes mit den Koordinaten 4,3 des Bildes mit der Kennung 2:

$$T^{1-2}(4,3) = |\, T^1(4,3) - T^2(4,3)\,| = |\, 17 - 255\,| = |\, -238\,| = 238$$

Allgemein gilt: $T^{n-(n+1)}(x,y) = |T^n(x,y) - T^{(n+1)}(x,y)|$
wobei $n$ und $(n+1)$ die eindeutigen Kennungen zweier unmittelbar aufeinander folgenden Bilder repräsentieren, $n$-$(n+1)$ die eindeutige Kennung des Differenzbildes repräsentiert und x,y die Koordinaten der einander entsprechenden Bildpunkte repräsentieren.

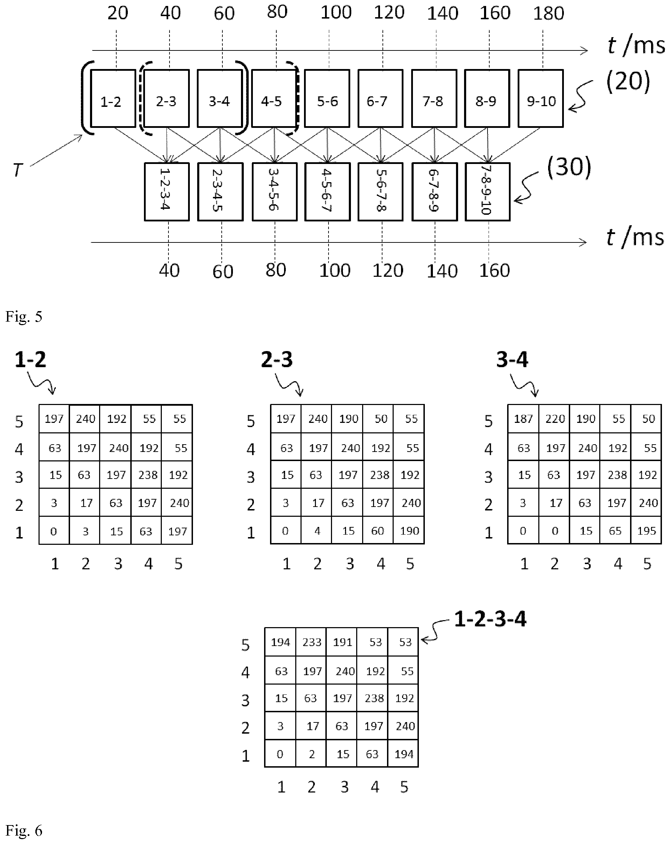

Fig. 5 zeigt beispielhaft und schematisch, wie aus einer Abfolge (20) von Differenzbildern mit den eindeutigen Kennungen 1-2, 2-3, 3-4, 4-5, 5-6, 6-7, 7-8, 8-9 und 9-10 eine Abfolge (30) von Mittelwertdifferenzbildern mit den eindeutigen Kennungen 1-2-3-4, 2-3-4-5, 3-4-5-6, 4-5-6-7, 5-6-7-8, 6-7-8-9 und 7-8-9-10 erzeugt wird.

Jedem Mittelwertdifferenzbild ist ein Zeitpunkt zugeordnet. Dem Mittelwertdifferenzbild mit der Kennung 1-2-3-4 ist der Zeitpunkt 40 ms zugeordnet, dem Differenzbild mit der Kennung 2-3-4-5 ist der Zeitpunkt 60 ms zugeordnet und so fort. Die Bildwechselfrequenz der Abfolge (30) von Mittelwertdifferenzbildern entspricht der Bildwechselfrequenz der Abfolge (20) von Differenzbildern; sie beträgt 50 Bilder pro Sekunde.

In Fig. 5 ist ein Zeitfenster $T$, das durch ein Klammerpaar repräsentiert wird, eingezeichnet. Das Zeitfenster $T$ hat eine Länge von 60 ms. Es kann daher drei unmittelbar aufeinander folgende Differenzbilder aufnehmen.

Das Zeitfenster $T$ wird zu Beginn an den Anfang der Abfolge (20) von Differenzbildern gesetzt. Es wird ein erstes Mittelwertdifferenzbild aus den Differenzbildern erzeugt, die vom Zeitfenster erfasst werden: dies sind die Differenzbilder mit den Kennungen 1-2, 2-3 und 3-4. In einem nächsten Schritt wird das Zeitfenster *T* um ein Differenzbild nach rechts verschoben. Es umfasst nun (siehe das gestrichelte Klammerpaar) die Differenzbilder mit den Kennungen 2-3, 3-4 und 4-5. Aus diesen Differenzbildern wird ein zweites Mittelwertdifferenzbild erzeugt. Anschließend wird das Zeitfenster wieder um ein Differenzbild nach rechts verschoben und ein drittes Mittelwertdifferenzbild aus den dann vom Zeitfenster erfassten Differenzbildern erzeugt. Der Vorgang wird so lange fortgesetzt (bildweises Verschieben des Zeitfensters, Erzeugen eines Mittelwertdifferenzbildes aus den vom Zeitfenster erfassten Differenzbildern) bis alle Differenzbilder wenigstens einmal in eine Erzeugung eines Mittelwertdifferenzbildes eingeflossen sind.

Fig. 6 zeigt beispielhaft und schematisch, wie aus einem Differenzbild mit der Kennung 1-2, einem unmittelbar auf das Differenzbild mit der Kennung 1-2 folgenden Differenzbild mit der Kennung 2-3 und einem unmittelbar auf das Differenzbild mit der Kennung 2-3 folgenden Differenzbild mit der Kennung 3-4 ein Mittelwertdifferenzbild mit der Kennung 1-2-3-4 erzeugt wird.

Das Differenzbild mit der Kennung 1-2, das Differenzbild mit der Kennung 2-3, das Differenzbild mit der Kennung 3-4 und das Mittelwertdifferenzbild mit der Kennung 1-2-3-4 bestehen jeweils aus 5x5=25 Bildpunkten. Jeder Bildpunkt ist durch Koordinaten eindeutig adressierbar. Jedem Bildpunkt ist ein Tonwert zugeordnet. Bei der Erzeugung wird für jeden Bildpunkt des Mittelwertdifferenzbildes der auf eine ganze Zahl gerundete arithmetische Mittelwert der Tonwerte der entsprechenden Bildpunkte der Differenzbilder errechnet und als Tonwert des Bildpunktes des Mittelwertdifferenzbildes gesetzt. Bildpunkte entsprechen dann einander, wenn sie die gleichen Koordinaten haben. Bei einer Rundung kann stets zur nächsten ganzen Zahl aufgerundet oder stets zur nächsten ganzen Zahl abgerundet oder ein Schwellenwert definiert werden, ab dem auf- oder abgerundet wird.

Der Tonwert $T^{1\text{-}2\text{-}3\text{-}4}(3,5)$ des Bildpunktes mit den Koordinaten 3,5 des Mittelwertdifferenzbildes 1-2-3-4 ergibt sich im vorliegenden Beispiel aus dem Tonwert $T^{1\text{-}2}(3,5)$ des Bildpunktes mit den Koordinaten 3,5 des Differenzbildes mit der Kennung 1-2 und dem Tonwert $T^{2\text{-}3}(3,5)$ des Bildpunktes mit den Koordinaten 3,5 des Differenzbildes mit der Kennung 2-3 und dem Tonwert $T^{3\text{-}4}(3,5)$ des Bildpunktes mit den Koordinaten 3,5 des Differenzbildes mit der Kennung 3-4:

$$T^{1\text{-}2\text{-}3\text{-}4}(3,5) = INT[(T^{1\text{-}2}(3,5) + T^{2\text{-}3}(3,5) + T^{3\text{-}4}(3,5))/3] = INT[(192+190+190)/3] = INT[190,\overline{6}]=191.$$

Die Funktion INT[] rundet eine nicht-ganze Zahl zur nächstliegenden ganzen Zahl auf oder ab (je nachdem, welcher Wert näher liegt); bei der Mitte (0,5) wird aufgerundet.

Allgemein gilt: $T^{n\text{-}(n+1)\text{-}(n+2)\text{-}(n+3)}(x,y) = INT[(T^{n}(x,y) + T^{(n+1)}(x,y) + T^{(n+2)}(x,y))/3]$

Bei den in den Figuren 5 und 6 gezeigten Beispielen wurden die Mittelwertdifferenzbilder aus jeweils drei unmittelbar aufeinander folgenden Differenzbildern erzeugt. Es ist natürlich denkbar, die Mittelwertdifferenzbilder aus einer anderen Zahl an unmittelbar aufeinander folgenden Differenzbildern zu erzeugen. Üblicherweise ist die Zahl *N* der Differenzbilder, über die gemittelt wird, größer als 3.

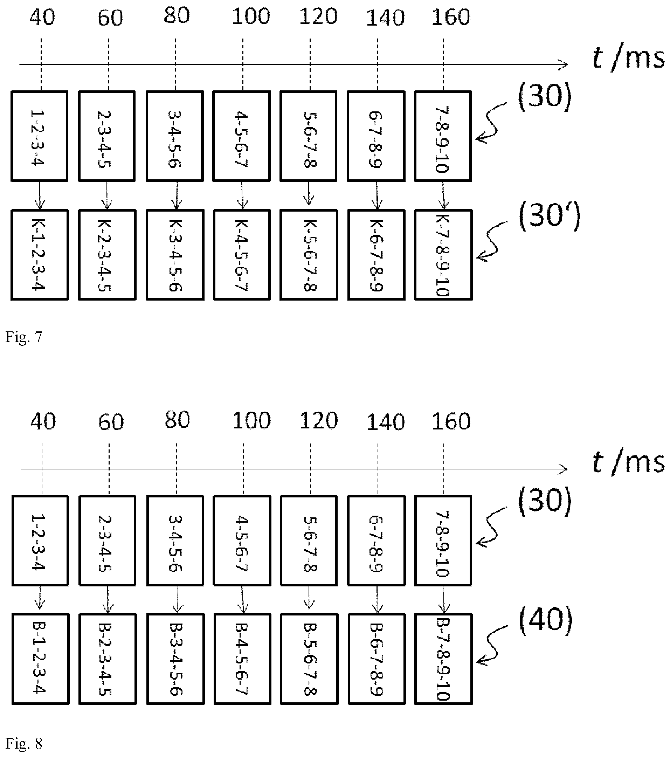

Fig. 7 zeigt beispielhaft und schematisch, wie aus einer Abfolge (30) von Mittelwertdifferenzbildern mit den eindeutigen Kennungen 1-2-3-4, 2-3-4-5, 3-4-5-6, 4-5-6-7, 5-6-7-8, 6-7-8-9 und 7-8-9-10 eine Abfolge (30') von kontrastreduzierten Mittelwertdifferenzbildern mit den eindeutigen Kennungen K-1-2-3-4, K-2-3-4-5, K-3-4-5-6, K-4-5-6-7, K-5-6-7-8, K-6-7-8-9 und K-7-8-9-10 erzeugt wird.

Jedem kontrastreduzierten Mittelwertdifferenzbild ist ein Zeitpunkt zugeordnet. Dem kontrastreduzierten Mittelwertdifferenzbild mit der Kennung K-1-2-3-4 ist der Zeitpunkt 40 ms zugeordnet, dem kontrastreduzierten Mittelwertdifferenzbild mit der Kennung K-2-3-4-5 ist der Zeitpunkt 60 ms zugeordnet und so fort. Die Bildwechselfrequenz der Abfolge (30') von kontrastreduzierten Mittelwertdifferenzbildern entspricht der Bildwechselfrequenz der Abfolge (30) von Mittelwertdifferenzbildern; sie beträgt 50 Bilder pro Sekunde.

Fig. 8 zeigt beispielhaft und schematisch, wie aus einer Abfolge (30) von Mittelwertdifferenzbildern mit den eindeutigen Kennungen 1-2-3-4, 2-3-4-5, 3-4-5-6, 4-5-6-7, 5-6-7-8, 6-7-8-9 und 7-8-9-10 eine Abfolge (40) von Binärbildern mit den eindeutigen Kennungen B-1-2-3-4, B-2-3-4-5, B-3-4-5-6, B-4-5-6-7, B-5-6-7-8, B-6-7-8-9 und B-7-8-9-10 erzeugt wird.

Jedem Binärbild ist ein Zeitpunkt zugeordnet. Dem Binärbild mit der Kennung B-1-2-3-4 ist der Zeitpunkt 40 ms zugeordnet, dem Binärbild mit der Kennung B-2-3-4-5 ist der Zeitpunkt 60 ms zugeordnet und so fort. Die Bildwechselfrequenz der Abfolge (40) von Binärbildern entspricht der Bildwechselfrequenz der Abfolge (30) von Mittelwertdifferenzbildern; sie beträgt 50 Bilder pro Sekunde.

Ebenso ist denkbar, dass aus einer Abfolge von kontrastreduzierten Mittelwertdifferenzbildern mit den eindeutigen Kennungen K-1-2-3-4, K-2-3-4-5, K-3-4-5-6, K-4-5-6-7, K-5-6-7-8, K-6-7-8-9 und K-7-8-9-10 eine Abfolge von Binärbildern mit den eindeutigen Kennungen B-1-2-3-4, B-2-3-4-5, B-3-4-5-6, B-4-5-6-7, B-5-6-7-8, B-6-7-8-9 und B-7-8-9-10 erzeugt wird.

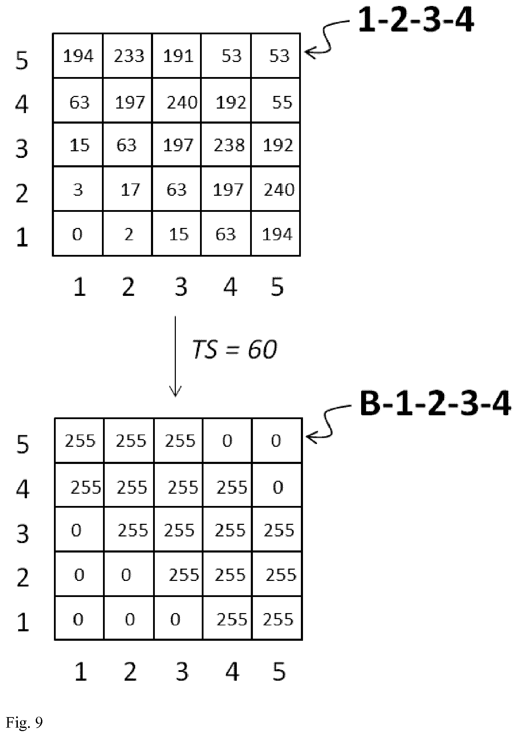

Fig. 9 zeigt beispielhaft und schematisch, wie aus einem Mittelwertdifferenzbild mit der eindeutigen Kennung 1-2-3-4 ein Binärbild mit der eindeutigen Kennung B-1-2-3-4 erzeugt wird.

Das Mittelwertdifferenzbild mit der Kennung 1-2-3-4 und das Binärbild mit der Kennung B-1-2-3-4 bestehen jeweils aus 5x5=25 Bildpunkten. Jeder Bildpunkt ist durch Koordinaten eindeutig adressierbar. Jedem Bildpunkt ist ein Tonwert zugeordnet. Bei der Erzeugung des Binärbildes wird der Tonwert jedes Bildpunkts des Mittelwertdifferenzbildes mit einem Tonwertschwellenwert *TS* verglichen. Ist der Tonwert eines Bildpunktes kleiner als der Tonwertschwellenwert *TS*, so wird der Tonwert des Bildpunktes auf einen ersten Tonwert gesetzt; ist der Tonwert des Bildpunktes größer als der Tonwertschwellenwert *TS* oder entspricht der Tonwert des Bildpunktes dem Tonwertschwellenwert *TS*, so wird der Tonwert des Bildpunktes auf einen zweiten Tonwert gesetzt. Im vorliegenden Beispiel ist der Tonwertschwellenwert *TS* = 60, der erste Tonwertschwellenwert 0 und der zweite Tonwertschwellenwert 255.

Der Tonwert des Bildpunktes mit den Koordinaten 4,1 des Mittelwertdifferenzbildes beträgt 63. Dieser Wert ist größer als der Tonwertschwellenwert *TS* = 60. Damit wird der der Tonwert des Bildpunktes mit den Koordinaten 4,1 des Binärbildes auf 255 gesetzt.

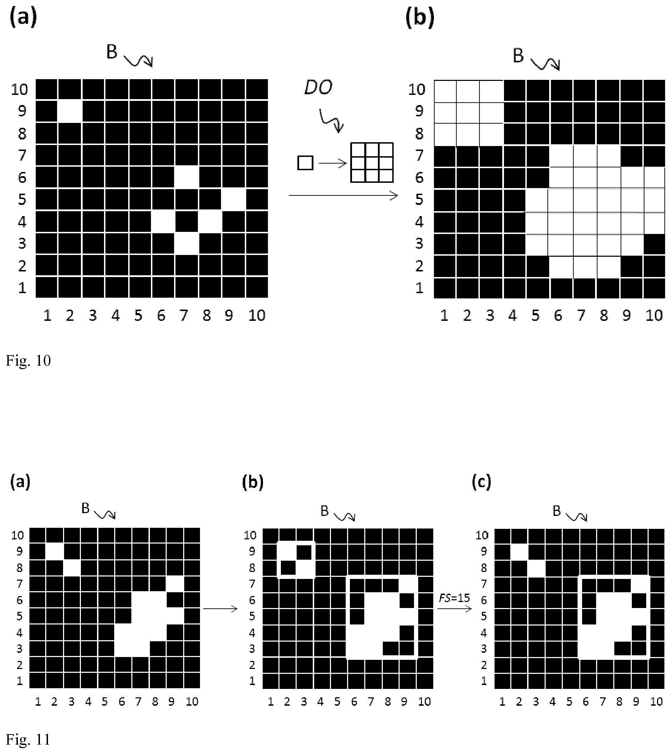

Fig. 10 zeigt beispielhaft und schematisch, wie aus einem Binärbild ein dilatiertes Binärbild erzeugt wird.

Ausgangspunkt ist das Binärbild B in Fig. 10 (a). Das Binärbild B besteht aus 10x10=100 Bildpunkten. Jeder Bildpunkt ist durch seine Koordinaten eindeutig adressierbar. Jedem Bildpunkt ist ein Tonwert zugeordnet. Es gibt nur zwei Tonwerte, die Tonwerte 0 ("schwarz") und 1 ("weiß").

Auf das Binärbild B wird ein Dilatationsoperator *DO* angewandt. Dieser dehnt alle Bildpunkte mit dem Tonwert "weiß" auf eine Matrix mit 3 x 3 Bildpunkten mit dem Tonwert "weiß" aus. Dadurch wird aus dem weißen Bildpunkt mit den Koordinaten 2,9 eine Matrix mit 9 weißen Bildpunkten; die dem Bildpunkt mit den Koordinaten 2,9 unmittelbar benachbarten Bildpunkte (mit den Koordinaten 1,10; 2,10; 3,10; 1,9; 3,9; 1,8; 2,8; 3,8) werden, unabhängig davon welchen Tonwert sie vorher hatten, ebenfalls weiß (siehe Fig. 10 (b)).

Es ist denkbar, dass die weißen Bildpunkte auf ein anderes strukturierendes Element als eine (3 x 3)-Matrix ausgedehnt werden. Es ist denkbar, dass ein solcher Dilatationsoperator mehrfach angewendet wird.

Fig. 11 zeigt beispielhaft und schematisch, wie Gruppen zusammenhängender Bildpunkte in einem Binärbild identifiziert und ihre Größen bestimmt werden können.

Ausgangspunkt ist das Binärbild B in Fig. 11 (a). Das Binärbild B besteht aus 10x10=100 Bildpunkten. Jeder Bildpunkt ist durch seine Koordinaten eindeutig adressierbar. Jedem Bildpunkt ist ein Tonwert zugeordnet. Es gibt nur zwei Tonwerte, die Tonwerte 0 ("schwarz") und 1 ("weiß").

In einem ersten Schritt gilt es, Gruppen zusammenhängender Bildpunkte mit dem Tonwert "weiß" zu erkennen. In dem Binärbild B sind zwei Gruppen zusammenhängender Bildpunkte mit dem Tonwert "weiß" zu erkennen. Zwei oder mehr Bildpunkte hängen dann zusammen, wenn jeder Bildpunkt mindestens einen unmittelbar benachbarten Bildpunkt mit demselben Tonwert (hier "weiß") aufweist. Die zwei identifizierten Gruppen sind in Fig. 11 (b) jeweils mit einem weißen rechteckigen Rahmen versehen.

In einem weiteren Schritt gilt es, die Größen der Gruppen zu bestimmen. Ein mögliches Verfahren ist in der Figur 10 beispielhaft dargestellt. Dabei wird jede Gruppe zusammenhängender Bildpunkte mit einem Rahmen versehen (siehe Fig. 11 (b)). Der Rahmen erfüllt alle folgenden Kriterien:

- der Rahmen ist rechteckig,
- seine Kanten verlaufen parallel zu den Kanten des Binärbildes,
- alle Bildpunkte, die den Tonwert "weiß" aufweisen und die zu einer Gruppe zusammenhängender Bildpunkte gehören, liegen innerhalb des Rahmens,
- der Rahmen umfasst so wenige Bildpunkte wie möglich, die nicht zu der Gruppe zusammenhängender Bildpunkte mit dem Tonwert "weiß" gehören.

Die Größe einer Gruppe kann als Zahl aller Bildpunkte, die von einem Rahmen erfasst werden, angegeben werden. Im vorliegenden Fall umfassen der eine Rahmen vier Bildpunkte und der andere Rahmen 20 Bildpunkte.

In einem weiteren Schritt werden die Größen der Flächen mit einem Gruppenschwellenwert *FS* vergleichen. Im vorliegenden Beispiel beträgt der Gruppenschwellenwert *FS* = 15 Bildpunkte. Damit ist die Gruppe mit 4 Bildpunkten kleiner als der Gruppenschwellenwert *FS* und die Gruppe mit 20 Bildpunkten größer als der Gruppenschwellenwert *FS*.

Von Interesse sind nun diejenigen Gruppen, die mindestens genauso groß wie der Gruppenschwellenwert *FS* sind. Das ist in Fig. 11 (c) die Gruppe mit 20 Bildpunkten.

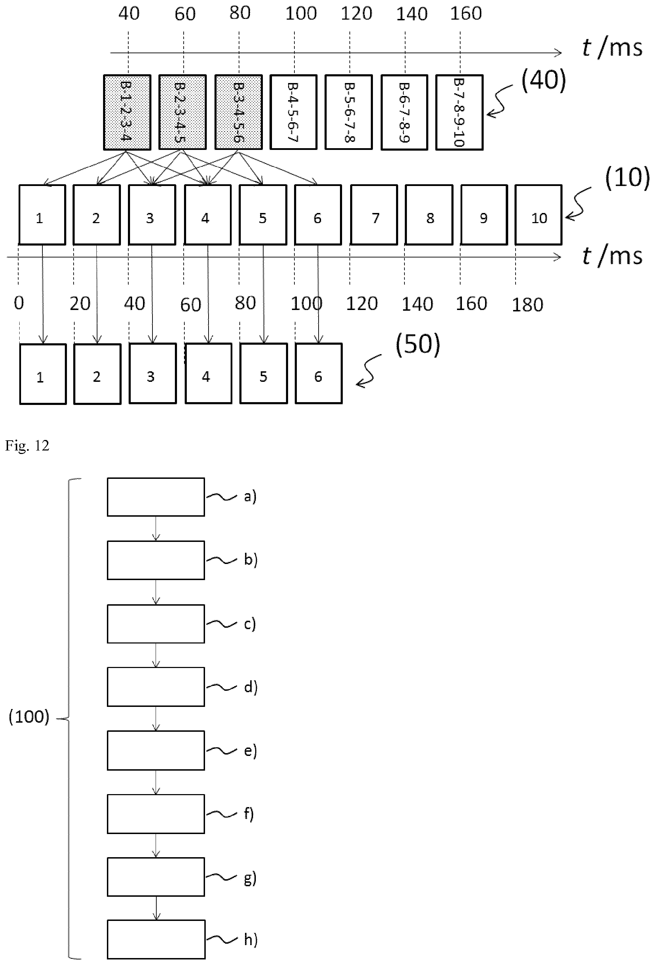

Fig. 12 zeigt beispielhaft und schematisch die Identifikation von denjenigen Binärbildern in einer Abfolge von Binärbildern, in denen keine einzige Gruppe zusammenhängender Bildpunkte mit dem zweiten Tonwert vorhanden ist, die größer als der Gruppenschwellenwert ist.

Jedes Binärbild der Abfolge (40) von Binärbildern weist eine eindeutige Kennung auf: B-1-2-3-4, B-2-3-4-5, B-3-4-5-6, B-4-5-6-7, B-5-6-7-8, B-6-7-8-9 und B-7-8-9-10.

Jedem Binärbild ist ein Zeitpunkt zugeordnet. Dem Binärbild mit der Kennung B-1-2-3-4 ist der Zeitpunkt 40 ms zugeordnet, dem Binärbild mit der Kennung B-2-3-4-5 ist der Zeitpunkt 60 ms zugeordnet und so fort.

Für jedes Binärbild wurde in einem vorangegangen Schritt geprüft, ob es mindestens eine Gruppe zusammenhängender Bildpunkte mit dem zweiten Tonwert enthält, die so groß ist wie ein definierter Gruppenschwellenwert ist oder die größer als der definierte Gruppenschwellenwert ist. Im vorliegenden Beispiel weisen die Binärbilder mit den Kennungen B-1-2-3-4, B-2-3-4-5 und B-3-4-5-6 mindestens eine Gruppe zusammenhängender Bildpunkte mit dem zweiten Tonwert auf, die so groß wie der definierte Gruppenschwellenwert ist oder die größer als der definierte Gruppenschwellenwert ist. Im vorliegenden Beispiel weisen die Binärbilder mit den eindeutigen Kennungen B-4-5-6-7, B-5-6-7-8, B-6-7-8-9 und B-7-8-9-10 keine einzige Fläche zusammenhängender Bildpunkte mit dem zweiten Tonwert auf, die so groß wie der definierte Gruppenschwellenwert ist oder die größer als der definierte Gruppenschwellenwert ist.

Nur dann, wenn ein Binärbild wenigstens eine Gruppe zusammenhangender Bildpunkt mit dem zweiten Tonwert aufweist, die mindestens so groß wie der definierte Gruppenschwellenwert ist, zeigt das Binärbild eine Bewegung, die oberhalb einer Bewegungsschwelle liegt und damit für eine weitergehende Analyse von Interesse ist. Binärbilder, die keine Bewegung oberhalb einer Bewegungsschwelle anzeigen, sind für eine weitere Auswertung nicht interessant. Diejenigen Bilder der Abfolge von Bildern, die in die Erzeugung der Binärbilder eingeflossen sind, die keine Bewegung oberhalb einer Bewegungsschwelle anzeigen, werden daher in einem weiteren Schritt gelöscht.

Im vorliegenden Beispiel sind die Bilder mit den eindeutigen Kennungen 1, 2, 3, 4, 5 und 6 in die Erzeugung der Binärbilder mit den eindeutigen Kennungen B-1-2-3-4, B-2-3-4-5 und B-3-4-5-6 eingeflossen. Diese Bilder zeigen damit ebenfalls eine Bewegung oberhalb einer Bewegungsschwelle und sind daher für eine weitergehende Analyse von Interesse. Die Bilder mit den eindeutigen Kennungen 7, 8, 9 und 10 sind nicht in die Erzeugung der Binärbilder mit den eindeutigen Kennungen B-1-2-3-4, B-2-3-4-5 und B-3-4-5-6 eingeflossen. Sie sind stattdessen in die Erzeugung der Binärbilder mit den eindeutigen Kennungen B-4-5-6-7, B-5-6-7-8, B-6-7-8-9 und B-7-8-9-10 eingeflossen. Die Binärbilder mit den eindeutigen Kennungen B-4-5-6-7, B-5-6-7-8, B-6-7-8-9 und B-7-8-9-10 zeigen jedoch keine Bewegung oberhalb einer Bewegungsschwelle. Damit zeigen auch die Bilder mit den Kennungen 7, 8, 9 und 10 keine Bewegung oberhalb einer Bewegungsschwelle und sind für eine weitergehende Analyse nicht von Interesse. Die Bilder mit den Kennungen 7, 8, 9 und 10 werden daher gelöscht.

Es entsteht eine reduzierte Abfolge (50) von Bildern, von denen alle eine Bewegung oberhalb einer Bewegungsschwelle zeigen.

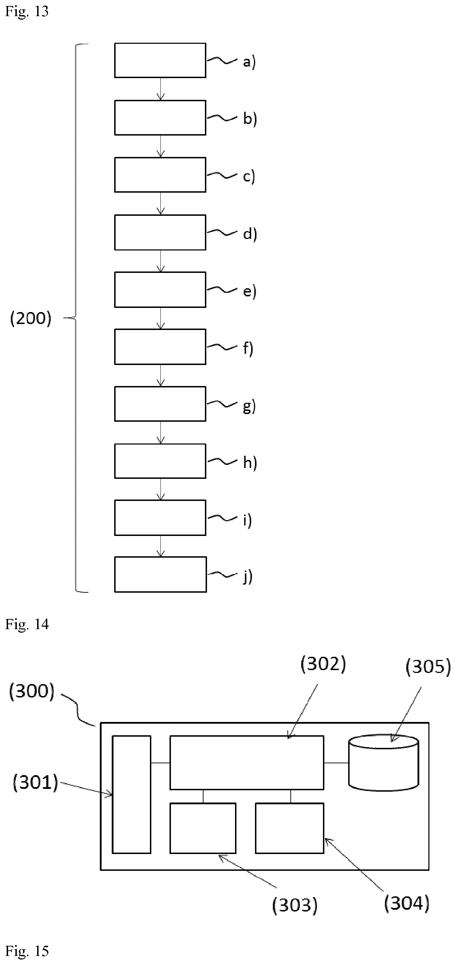

Fig. 13 zeigt eine bevorzugte Ausführungsform des erfindungsgemäßen Verfahrens in Form eines Ablaufdiagramms. Das Verfahren (100) umfasst die Schritte:

a) Empfangen einer zeitlichen Abfolge von Bildern, wobei jedes Bild eine Vielzahl an Bildpunkten aufweist, wobei jeder Bildpunkt durch einen Tonwert charakterisiert ist,

b) Erzeugen einer Abfolge von Differenzbildern aus der Abfolge von Bildern, dadurch, dass für jedes Paar benachbarter Bilder der zeitlichen Abfolge von Bildern jeweils ein Differenzbild erzeugt wird, wobei jedes Differenzbild durch eine Vielzahl an Bildpunkten mit jeweils einem Tonwert charakterisiert ist, wobei der Tonwert jedes Bildpunkts jedes Differenzbildes einen Absolutwert der Differenz der Tonwerte der entsprechenden Bildpunkte benachbarter Bilder darstellt,

c) Erzeugen einer Abfolge von Mittelwertdifferenzbildern aus der Abfolge von Differenzbildern, dadurch, dass ein Zeitfenster definiert wird, das eine definierte Zahl an benachbarten Differenzbildern aufnehmen kann, dass das Zeitfenster bildweise vom Beginn der Abfolge von Differenzbildern bis zum Ende der Abfolge von Differenzbildern verschoben wird, und bei jedem bildweisen Verschieben jeweils ein Mittelwertdifferenzbild auf Basis der vom Zeitfenster erfassten Differenzbilder erzeugt wird, wobei der Tonwert jedes Bildpunkts jedes Mittelwertdifferenzbildes einen Mittelwert der Tonwerte der entsprechenden Bildpunkte der von dem Zeitfenster erfassten Differenzbilder darstellt,

d) Erzeugen einer Abfolge von Binärbildern aus der Abfolge von Mittelwertdifferenzbildern, dadurch, dass die Tonwerte aller Bildpunkte jedes Mittelwertdifferenzbildes, die unterhalb eines definierten Tonwertschwellenwertes liegen, auf einen ersten Tonwert gesetzt werden, und die Tonwerte aller Bildpunkte jedes Mittelwertdifferenzbildes, die oberhalb des definierten Tonwertschwellenwertes liegen oder dem definierten Tonwertschwellenwert entsprechen, auf einen zweiten Tonwert gesetzt werden,

e) Identifizieren von Gruppen zusammenhängender Bildpunkte mit einem zweiten Tonwert in jedem Binärbild der Abfolge von Binärbildern

f) Ermitteln der Größen der Gruppen für jedes Binärbild und Vergleichen der jeweiligen Größe mit einem Gruppenschwellenwert,

g) Identifizieren derjenigen Binärbilder, die mindestens eine Gruppe aufweisen, die so groß wie der Gruppenschwellenwert ist oder die größer als der Gruppenschwellenwert ist,

h) Löschen aller Bilder der zeitlichen Abfolge von Bildern, die nicht in die Erzeugung eines in Schritt g) identifizierten Binärbildes eingeflossen sind.

Fig. 14 zeigt eine weitere bevorzugte Ausführungsform des erfindungsgemäßen Verfahrens in Form eines Ablauf Diagramms. Das Verfahren (200) umfasst die Schritte:

a) Empfangen einer zeitlichen Abfolge von Bildern, wobei jedes Bild eine Vielzahl an Bildpunkten aufweist, wobei jeder Bildpunkt durch einen Tonwert charakterisiert ist,

b) Erzeugen einer Abfolge von Differenzbildern aus der Abfolge von Bildern, dadurch, dass für jedes Paar benachbarter Bilder der zeitlichen Abfolge von Bildern jeweils ein Differenzbild erzeugt wird, wobei jedes Differenzbild durch eine Vielzahl an Bildpunkten mit jeweils einem Tonwert charakterisiert ist, wobei der Tonwert jedes Bildpunkts jedes Differenzbildes einen Absolutwert der Differenz der Tonwerte der entsprechenden Bildpunkte benachbarter Bilder darstellt,

c) Erzeugen einer Abfolge von Mittelwertdifferenzbildern aus der Abfolge von Differenzbildern, dadurch, dass ein Zeitfenster definiert wird, das eine definierte Zahl an benachbarten Differenzbildern aufnehmen kann, dass das Zeitfenster bildweise vom Beginn der Abfolge von Differenzbildern bis zum Ende der Abfolge von Differenzbildern verschoben wird, und bei jedem bildweisen Verschieben jeweils ein Mittelwertdifferenzbild auf Basis der vom Zeitfenster erfassten Differenzbilder erzeugt wird, wobei der Tonwert jedes Bildpunkts jedes Mittelwertdifferenzbildes einen Mittelwert der Tonwerte der entsprechenden Bildpunkte der von dem Zeitfenster erfassten Differenzbilder darstellt,

d) Erzeugen einer Abfolge von kontrastreduzierten Mittelwertdifferenzbildern aus der Abfolge von Mittelwertdifferenzbildern durch Anwenden eines Gaußschen Weichzeichners auf alle Mittelwertdifferenzbilder der Abfolge von Mittelwertdifferenzbildern,

e) Erzeugen einer Abfolge von Binärbildern aus der Abfolge von kontrastreduzierten Mittelwertdifferenzbildern, dadurch, dass die Tonwerte aller Bildpunkte jedes kontrastreduzierten Mittelwertdifferenzbildes, die unterhalb eines definierten Tonwertschwellenwertes liegen, auf einen ersten Tonwert gesetzt werden, und die Tonwerte aller Bildpunkte jedes kontrastreduzierten Mittelwertdifferenzbildes, die oberhalb des definierten Tonwertschwellenwertes liegen oder dem definierten Tonwertschwellenwert entsprechen, auf einen zweiten Tonwert gesetzt werden,

f) Erzeugen einer Abfolge von dilatierten Binärbildern aus der Abfolge von Binärbildern, dadurch, dass diejenigen Bildpunkte jedes Binärbildes, die den zweiten Tonwert aufweisen, einfach oder mehrfach auf eine Form eines definierten strukturierenden Elementes ausgedehnt werden,

g) Identifizieren von Gruppen zusammenhängender Bildpunkte mit einem zweiten Tonwert in jedem dilatierten Binärbild der Abfolge von dilatierten Binärbildern,

h) Ermitteln der Größen der Gruppen für jedes dilatierte Binärbild und Vergleichen der jeweiligen Größe mit einem Gruppenschwellenwert,

i) Identifizieren derjenigen dilatierten Binärbilder, die mindestens eine Gruppe aufweisen, die so groß wie der Gruppenschwellenwert ist oder die größer als der Gruppenschwellenwert ist,

j) Löschen aller Bilder der zeitlichen Abfolge von Bildern, die nicht in die Erzeugung eines in Schritt i) identifizierten dilatierten Binärbildes eingeflossen sind.

Fig. 15 zeigt beispielhaft und schematisch eine bevorzugte Ausführungsform der erfindungsgemäßen Vorrichtung.

Die Vorrichtung (300) umfasst eine Eingabeeinheit (301), eine Steuereinheit (302), eine Recheneinheit (303), eine Ausgabeeinheit (304) und einen Datenspeicher (305).

Die Steuereinheit (302) ist konfiguriert, die Eingabeeinheit (301) zu veranlassen, eine Abfolge von Bildern zu empfangen.

Die Steuereinheit (302) ist konfiguriert, die Recheneinheit zu veranlassen

- aus der Abfolge von Bildern eine Abfolge von Differenzbildern zu erzeugen,
- aus der Abfolge von Differenzbildern eine Abfolge von Mittelwertdifferenzbildern zu erzeugen,
- aus der Abfolge von Mittelwertdifferenzbildern eine Abfolge kontrastreduzierter Mittelwertdifferenzbilder zu erzeugen
- aus der Abfolge von Mittelwertdifferenzbildern oder der Abfolge kontrastreduzierter Mittelwertdifferenzbilder eine Abfolge von Binärbildern zu erzeugen
- aus der Abfolge von Binärbildern eine Abfolge dilatierter Binärbilder zu erzeugen
- in den Binärbildern der Abfolge von Binärbildern oder in den dilatierten Binärbildern der Abfolge von dilatierten Binärbildern eine Gruppen zusammenhängender Bildpunkte zu identifizieren,
- in den Binärbildern der Abfolge von Binärbildern oder in den dilatierten Binärbildern der Abfolge von dilatierten Binärbildern die Größe jeder identifizierten Gruppe zu ermitteln,
- die ermittelte Größe jeder identifizierten Gruppe mit einem Schwellenwert zu vergleichen und die Binärbilder oder dilatierten Binärbilder zu identifizieren, die mindestens eine Gruppe aufweisen, die so groß wie der Schwellenwert ist oder die größer als der Schwellenwert ist,
- alle Bilder der zeitlichen Abfolge von Bildern, die keine einzige Gruppe aufweisen, deren Größe mindestens so groß wie der Schwellenwert ist, zu löschen, wobei eine reduzierte Abfolge von Bildern entsteht.

Die Steuereinheit (302) ist konfiguriert, die reduzierte Abfolge von Bildern in dem Datenspeicher (305) zu speichern und/oder die Ausgabeeinheit (304) zu veranlassen, die reduzierte Abfolge von Bildern auszugeben.

**Patentansprüche**

**1.** Verfahren zur Reduzierung von Videoaufnahmen auf zeitliche Abschnitte, in denen eine oder mehrere Bewegungen eines Objekts oberhalb einer Bewegungsschwelle aufgezeichnet sind, umfassend die folgenden Schritte:

a) Empfangen einer zeitlichen Abfolge von Bildern,
b) Erzeugen einer Abfolge von Differenzbildern aus der Abfolge von Bildern, dadurch, dass für jedes Paar benachbarter Bilder der zeitlichen Abfolge von Bildern jeweils ein Differenzbild erzeugt wird,
c) Erzeugen einer Abfolge von Mittelwertdifferenzbildern aus der Abfolge von Differenzbildern, dadurch, dass für alle Gruppen von aufeinander folgenden Differenzbildern mit einer definierten Anzahl von Differenzbildern, jeweils die einer Gruppe zugehörigen Differenzbilder gemittelt werden,
d) Erzeugen einer Abfolge von Binärbildern aus der Abfolge von Mittelwertdifferenzbildern,
e) Identifizieren von Gruppen zusammenhängender Bildpunkte in jedem Binärbild,
f) Ermitteln der Größen der Gruppen von zusammenhängenden Bildpunkten und Vergleichen der jeweiligen Größe einer Gruppe mit einem Schwellenwert,
g) Identifizieren derjenigen Binärbilder, die mindestens eine Gruppe aufweisen, die so groß wie der Schwellenwert ist oder die größer als der Schwellenwert ist,
h) Löschen aller Bilder der zeitlichen Abfolge von Bildern, die nicht in die Erzeugung eines in Schritt g) identifizierten Binärbildes eingeflossen sind.

**2.** Verfahren gemäß Anspruch 1,

- wobei jedes Bild der Abfolge von Bildern eine Vielzahl an Bildpunkten aufweist, wobei jeder Bildpunkt durch einen Tonwert charakterisiert ist,
- wobei jedes Differenzbild der Abfolge von Differenzbildern durch eine Vielzahl an Bildpunkten mit jeweils einem Tonwert charakterisiert ist, wobei der Tonwert jedes Bildpunkts jedes Differenzbildes einen Absolutwert der Differenz der Tonwerte der entsprechenden Bildpunkte von zwei zeitlich unmittelbar aufeinander folgenden Bildern darstellt,
- wobei zum Erzeugen der Abfolge von Mittelwertdifferenzbildern ein Zeitfenster definiert wird, das eine definierte Zahl an zeitlich unmittelbar aufeinander folgenden Differenzbildern aufnehmen kann, wobei das Zeitfenster bildweise vom Beginn der Abfolge von Differenzbildern bis zum Ende der Abfolge von Differenzbildern verschoben wird, und bei jedem bildweisen Verschieben jeweils ein Mittelwertdifferenzbild auf Basis der vom Zeitfenster erfassten Differenzbilder erzeugt wird, wobei der Tonwert jedes Bildpunkts jedes Mittelwertdifferenzbildes einen Mittelwert der Tonwerte der entsprechenden Bildpunkte der von dem Zeitfenster erfassten Differenzbilder darstellt,
- wobei zum Erzeugen der Abfolge von Binärbildern aus der Abfolge von Mittelwertdifferenzbildern die Tonwerte aller Bildpunkte jedes Mittelwertdifferenzbildes, die unterhalb eines definierten Tonwertschwellenwertes liegen, auf einen ersten Tonwert gesetzt werden, und die Tonwerte aller Bildpunkte jedes (kontrastreduzierten) Mittelwertdifferenzbildes, die oberhalb des definierten Tonwertschwellenwertes liegen oder dem definierten Tonwertschwellenwert entsprechen, auf einen zweiten Tonwert gesetzt werden.

3. Verfahren gemäß einem der Ansprüche 1 oder 2, ferner umfassend den folgenden Schritt nach dem Schritt c) und vor dem Schritt d):
Erzeugen einer Abfolge von kontrastreduzierten Mittelwertdifferenzbildern durch Anwenden eines Gaußschen Weichzeichners auf alle Mittelwertdifferenzbilder der Abfolge von Mittelwertdifferenzbildern.

4. Verfahren gemäß einem der Ansprüche 1, 2 oder 3, ferner umfassend den folgenden Schritt nach dem Schritt d) und vor dem Schritt e):
Erzeugen einer Abfolge von dilatierten Binärbildern aus der Abfolge von Binärbildern, dadurch, dass diejenigen Bildpunkte jedes Binärbildes, die den zweiten Tonwert aufweisen, einfach oder mehrfach auf eine Form eines definierten strukturierenden Elementes ausgedehnt werden.

5. Verfahren gemäß einem der Ansprüche 1, 2, 3 oder 4, wobei die Größe jeder Gruppe in Schritt f) als die Zahl der zur jeweiligen Gruppe gehörenden Bildpunkte mit einem zweiten Tonwert gesetzt wird.

6. Verfahren gemäß einem der Ansprüche 1, 2, 3 oder 4,
wobei zum Bestimmen der Größe einer Gruppe zusammenhängender Bildpunkte in einem Binärbild ein Rahmen um die Gruppe betrachtet wird, der folgende Kriterien erfüllt:

   - der Rahmen ist rechteckig,
   - seine Kanten verlaufen parallel zu den Kanten des Binärbildes,
   - alle Bildpunkte, die den zweiten Tonwert aufweisen und die zu einer Gruppe zusammenhängender Bildpunkte gehören, liegen innerhalb des Rahmens,
   - der Rahmen umfasst so wenige Bildpunkte wie möglich, die nicht zu der Gruppe zusammenhängender Bildpunkte mit dem zweiten Tonwert gehören,

   wobei die Gesamtzahl der Bildpunkte, die innerhalb des Rahmens liegen, als die Größe der Gruppe gesetzt wird.

7. Verfahren gemäß einem der Ansprüche 1, 2, 3, 4, 5 oder 6, wobei es sich bei dem Objekt um ein Lebewesen, vorzugsweise ein tierisches Lebewesen, ganz besonders bevorzugt um ein Versuchstier, am meisten bevorzugt um einen Hund handelt.

8. Verfahren gemäß Anspruch 7, wobei es sich bei der mindestens einen Bewegung um ein Schütteln des Körpers des Lebewesens oder eines Teils des Körpers des Lebewesens, Aktivitäten des Lebewesens die eigene Körperpflege betreffend und/oder ein Lecken, ein Kauen, ein Kratzen und/oder ein Reiben des Lebewesens handelt.

9. Vorrichtung umfassend

   - eine Eingabeeinheit,
   - eine Steuereinheit,
   - eine Recheneinheit, und
   - eine Ausgabeeinheit und/oder einen Datenspeicher,

   wobei die Steuereinheit konfiguriert ist, die Eingabeeinheit zu veranlassen, eine Abfolge von Bildern zu empfangen,
   wobei die Steuereinheit konfiguriert ist, die Recheneinheit zu veranlassen, die folgenden Schritte durchzuführen:

   a) Erzeugen einer Abfolge von Differenzbildern aus der Abfolge von Bildern, dadurch, dass für jedes Paar benachbarter Bilder der zeitlichen Abfolge von Bildern jeweils ein Differenzbild erzeugt wird,
   b) Erzeugen einer Abfolge von Mittelwertdifferenzbildern aus der Abfolge von Differenzbildern, dadurch, dass für alle Gruppen von aufeinander folgenden Differenzbildern mit einer definierten Anzahl von Differenzbildern, jeweils die einer Gruppe zugehörigen Differenzbilder gemittelt werden,
   c) Erzeugen einer Abfolge von Binärbildern aus der Abfolge von Mittelwertdifferenzbildern,
   d) Identifizieren von Gruppen zusammenhängender Bildpunkte in jedem Binärbild,
   e) Ermitteln den Größen der Gruppen von zusammenhängenden Bildpunkten und Vergleichen der jeweiligen Größe mit einem Schwellenwert,

f) Identifizieren derjenigen Binärbilder, die mindestens eine Gruppe aufweisen, die so groß wie der Schwellenwert ist oder die größer als der Schwellenwert ist,

g) Löschen aller Bilder der zeitlichen Abfolge von Bildern, die nicht in die Erzeugung eines in Schritt f) identifizierten Binärbildes eingeflossen sind, wobei eine reduzierte Abfolge von Bildern erzeugt wird.

wobei die Steuereinheit konfiguriert ist, die reduzierte Abfolge von Bildern in dem Datenspeicher zu speichern und/oder die Ausgabeeinheit zu veranlassen, die reduzierte Abfolge von Bildern auszugeben.

10. Vorrichtung gemäß Anspruch 9, wobei die Steuereinheit konfiguriert ist, die Recheneinheit zu veranlassen, einen oder mehrere der Schritte des Verfahrens gemäß einem der Ansprüche 1 bis 8 auszuführen.

11. Verwendung einer Vorrichtung gemäß einem der Ansprüche 9 oder 10 bei der Beobachtung von Tieren, vorzugsweise Versuchstieren, ganz besonders bevorzugt Hunden.

12. Computerprogrammprodukt umfassend einen Datenträger, auf dem ein Computerprogramm gespeichert ist, das in den Arbeitsspeicher eines Computers geladen werden kann und dort den Computer dazu veranlasst, folgende Schritte ausführen:

a) Empfangen einer zeitlichen Abfolge von Bildern,

b) Erzeugen einer Abfolge von Differenzbildern aus der Abfolge von Bildern, dadurch, dass für jedes Paar benachbarter Bilder der zeitlichen Abfolge von Bildern jeweils ein Differenzbild erzeugt wird,

c) Erzeugen einer Abfolge von Mittelwertdifferenzbildern aus der Abfolge von Differenzbildern, dadurch, dass für alle Gruppen von aufeinander folgenden Differenzbildern mit einer definierten Anzahl von Differenzbildern, jeweils die einer Gruppe zugehörigen Differenzbilder gemittelt werden,

d) Erzeugen einer Abfolge von Binärbildern aus der Abfolge von Mittelwertdifferenzbildern,

e) Identifizieren von Gruppen zusammenhängender Bildpunkte in jedem Binärbild,

f) Ermitteln den Größen der Gruppen von zusammenhängenden Bildpunkten und Vergleichen der jeweiligen Größe einer Gruppe mit einem Schwellenwert,

g) Identifizieren derjenigen Binärbilder, die mindestens eine Gruppe aufweisen, die so groß wie der Schwellenwert ist oder die größer als der Schwellenwert ist,

h) Löschen aller Bilder der zeitlichen Abfolge von Bildern, die nicht in die Erzeugung eines in Schritt g) identifizierten Binärbildes eingeflossen sind, und dadurch Erzeugen einer reduzierten Abfolge von Bildern,

i) Speichern der reduzierten Abfolge von Bildern in einem Datenspeicher und/oder Ausgeben der reduzierten Abfolge von Bildern auf einem Monitor.

13. Computerprogrammprodukt gemäß Anspruch 12, das in den Arbeitsspeicher eines Computers geladen werden kann und dort den Computer dazu veranlasst, einen oder mehrere Schritte des Verfahren gemäß einem der Ansprüche 1 bis 8 auszuführen.

(10)

Fig. 1

| y | | 255 | 255 | 200 | 63 | 15 | 3 | 0 | 0 | 0 | 0 |
|---|----|-----|-----|-----|-----|-----|-----|-----|-----|-----|-----|
| | 10 | 255 | 255 | 200 | 63 | 15 | 3 | 0 | 0 | 0 | 0 |
| | 9 | 255 | 255 | 255 | 200 | 63 | 15 | 3 | 0 | 0 | 0 |
| | 8 | 200 | 255 | 255 | 255 | 200 | 63 | 15 | 3 | 0 | 0 |
| | 7 | 63 | 200 | 255 | 255 | 255 | 198 | 63 | 15 | 3 | 0 |
| | 6 | 15 | 63 | 200 | 255 | 255 | 255 | 200 | 63 | 15 | 3 |
| | 5 | 3 | 15 | 63 | 200 | 255 | 255 | 255 | 200 | 63 | 15 |
| | 4 | 0 | 3 | 15 | 63 | 200 | 255 | 255 | 255 | 200 | 63 |
| | 3 | 0 | 0 | 3 | 17 | 63 | 200 | 255 | 255 | 255 | 200 |
| | 2 | 0 | 0 | 0 | 3 | 15 | 63 | 200 | 255 | 255 | 255 |
| | 1 | 0 | 0 | 0 | 0 | 3 | 15 | 63 | 200 | 255 | 255 |
| | | 1 | 2 | 3 | 4 | 5 | 6 | 7 | 8 | 9 | 10 |

$x$

Fig. 2

Fig. 3

Fig. 4

20   40   60   80   100  120  140  160  180

$t$ /ms

| 1-2 | 2-3 | 3-4 | 4-5 | 5-6 | 6-7 | 7-8 | 8-9 | 9-10 |

(20)

$T$

| 1-2-3-4 | 2-3-4-5 | 3-4-5-6 | 4-5-6-7 | 5-6-7-8 | 6-7-8-9 | 7-8-9-10 |

(30)

$t$ /ms

40   60   80   100  120  140  160

Fig. 5

**1-2**

| | 1 | 2 | 3 | 4 | 5 |
|---|---|---|---|---|---|
| 5 | 197 | 240 | 192 | 55 | 55 |
| 4 | 63 | 197 | 240 | 192 | 55 |
| 3 | 15 | 63 | 197 | 238 | 192 |
| 2 | 3 | 17 | 63 | 197 | 240 |
| 1 | 0 | 3 | 15 | 63 | 197 |

**2-3**

| | 1 | 2 | 3 | 4 | 5 |
|---|---|---|---|---|---|
| 5 | 197 | 240 | 190 | 50 | 55 |
| 4 | 63 | 197 | 240 | 192 | 55 |
| 3 | 15 | 63 | 197 | 238 | 192 |
| 2 | 3 | 17 | 63 | 197 | 240 |
| 1 | 0 | 4 | 15 | 60 | 190 |

**3-4**

| | 1 | 2 | 3 | 4 | 5 |
|---|---|---|---|---|---|
| 5 | 187 | 220 | 190 | 55 | 50 |
| 4 | 63 | 197 | 240 | 192 | 55 |
| 3 | 15 | 63 | 197 | 238 | 192 |
| 2 | 3 | 17 | 63 | 197 | 240 |
| 1 | 0 | 0 | 15 | 65 | 195 |

**1-2-3-4**

| | 1 | 2 | 3 | 4 | 5 |
|---|---|---|---|---|---|
| 5 | 194 | 233 | 191 | 53 | 53 |
| 4 | 63 | 197 | 240 | 192 | 55 |
| 3 | 15 | 63 | 197 | 238 | 192 |
| 2 | 3 | 17 | 63 | 197 | 240 |
| 1 | 0 | 2 | 15 | 63 | 194 |

Fig. 6

Fig. 7

Fig. 8

**1-2-3-4**

| 5 | 194 | 233 | 191 | 53 | 53 |
|---|---|---|---|---|---|
| 4 | 63 | 197 | 240 | 192 | 55 |
| 3 | 15 | 63 | 197 | 238 | 192 |
| 2 | 3 | 17 | 63 | 197 | 240 |
| 1 | 0 | 2 | 15 | 63 | 194 |
|   | 1 | 2 | 3 | 4 | 5 |

$TS = 60$

**B-1-2-3-4**

| 5 | 255 | 255 | 255 | 0 | 0 |
|---|---|---|---|---|---|
| 4 | 255 | 255 | 255 | 255 | 0 |
| 3 | 0 | 255 | 255 | 255 | 255 |
| 2 | 0 | 0 | 255 | 255 | 255 |
| 1 | 0 | 0 | 0 | 255 | 255 |
|   | 1 | 2 | 3 | 4 | 5 |

Fig. 9

**(a)**

**(b)**

Fig. 10

**(a)**   **(b)**   **(c)**

Fig. 11

t /ms

B-1-2-3-4　B-2-3-4-5　B-3-4-5-6　B-4-5-6-7　B-5-6-7-8　B-6-7-8-9　B-7-8-9-10 (40)

(10)

t /ms

(50)

Fig. 12

(100)

a)

b)

c)

d)

e)

f)

g)

h)

Fig. 13

a)

b)

c)

d)

e)

(200)

f)

g)

h)

i)

j)

Fig. 14

(302)    (305)

(300)

(301)

(303)    (304)

Fig. 15

Europäisches
Patentamt

European
Patent Office

Office européen
des brevets

**EUROPÄISCHER RECHERCHENBERICHT**

Nummer der Anmeldung

EP 19 16 3648

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DONOVAN H PARKS ET AL: "Evaluation of Background Subtraction Algorithms with Post-Processing", ADVANCED VIDEO AND SIGNAL BASED SURVEILLANCE, 2008. AVSS '08. IEEE FIFTH INTERNATIONAL CONFERENCE ON, IEEE, PISCATAWAY, NJ, USA, September 2008 (2008-09), Seiten 192-199, XP031381497, ISBN: 978-0-7695-3341-4 | 1,2,4-13 | INV. G06T7/254 ADD. H04N5/14 |
| A | * Zusammenfassung; Abbildungen 1,2 * * Abschnitte 3.2, 3.3, 4.2 * | 3 | |
| Y | IOANNIS KOMPATSIARIS ET AL: "Spatiotemporal Segmentation and Tracking of Objects for Visualization of Videoconference Image Sequences", IEEE TRANSACTIONS ON CIRCUITS AND SYSTEMS FOR VIDEO TECHNOLOGY, INSTITUTE OF ELECTRICAL AND ELECTRONICS ENGINEERS, US, Bd. 10, Nr. 8, Dezember 2000 (2000-12), XP011014134, ISSN: 1051-8215 | 1,2,4-13 | |
| A | * Abschnitt II.A, Gleichung (1) * | 3 | **RECHERCHIERTE SACHGEBIETE (IPC)** G06T H04N |
| Y | US 2018/268563 A1 (CHEN YING [US] ET AL) 20. September 2018 (2018-09-20) | 1,2,4-13 | |
| A | * Zusammenfassung; Ansprüche 1-30; Abbildungen 1-17 * * Absatz [0069] - Absatz [0070] * * Absatz [0076] - Absatz [0086] * * Absatz [0089] - Absatz [0090] * | 3 | |

Der vorliegende Recherchenbericht wurde für alle Patentansprüche erstellt

| Recherchenort | Abschlußdatum der Recherche | Prüfer |
|---|---|---|
| München | 9. September 2019 | Borotschnig, Hermann |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 16 3648

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-09-2019

| Im Recherchenbericht angeführtes Patentdokument | Datum der Veröffentlichung | Mitglied(er) der Patentfamilie | Datum der Veröffentlichung |
|---|---|---|---|
| US 2018268563 A1 | 20-09-2018 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

**In der Beschreibung aufgeführte Nicht-Patentliteratur**

- **WILLIAM K. PRATT.** Introduction to Digital Image Processing. CRC Press, 2013